(19) Europäisches Patentamt / European Patent Office / Office européen des brevets

(11) **EP 1 753 247 A1**

(12) **EUROPEAN PATENT APPLICATION**
published in accordance with Art. 158(3) EPC

(43) Date of publication:
**14.02.2007 Bulletin 2007/07**

(51) Int Cl.:
**H04N 7/32** (2006.01)

(21) Application number: **05745737.6**

(22) Date of filing: **01.06.2005**

(86) International application number:
**PCT/JP2005/010020**

(87) International publication number:
**WO 2005/120077 (15.12.2005 Gazette 2005/50)**

(84) Designated Contracting States:
**DE FR GB**

(30) Priority: **03.06.2004 JP 2004165453**

(71) Applicant: **SONY CORPORATION**
**Tokyo 141 (JP)**

(72) Inventors:
• **TANAKA, Junichi;**
**c/o SONY CORPORATION**
**Tokyo,1410001 (JP)**

• **SATO, Kazushi;**
**c/o SONY CORPORATION**
**Tokyo,1410001 (JP)**
• **HASHINO, Tsukasa;**
**c/o SONY CORPORATION**
**Tokyo,1410001 (JP)**
• **YAGASAKI, Yoichi;**
**c/o SONY CORPORATION**
**Tokyo,1410001 (JP)**

(74) Representative: **Horner, David Richard**
**D Young & Co**
**120 Holborn**
**London EC1N 2DY (GB)**

(54) **IMAGE PROCESSING DEVICE, PROGRAM THEREOF, AND METHOD THEREOF**

(57) Motion prediction and compensation circuit does not select Skip mode and Direct mode in motion prediction and compensation mode when a difference between prediction motion vector and actual motion vector exceed predetermined standard.

FIG. 5

**Description**

TECHNICAL FIELD

The present invention relates to an image processing apparatus used for encoding image data, a program for the same, and a method of the same.

BACKGROUND ART

In recent years, apparatuses based on a method such as a MPEG (Moving Picture Experts Group) which handles image data as digital data and, at that time, for the purpose of transmitting and storing information with a high efficiency, compressed the image data by using a discrete cosine transform or other orthogonal transform and motion compensation utilizing the redundancy peculiar to image information, have been spreading in both distribution of information by broadcast stations etc. and reception of information at general homes.

A coding system (method) called the "AVC/h.264" is being proposed as a successor to the MPEG-2 and MPEG-4 systems (methods).

The AVC/h.264 system defines a plurality of modes for encoding for each of an intra-prediction mode and a motion prediction and compensation mode and selects the mode having the smallest code amount (the highest coding efficiency) based on the characteristics of the image data.

DISCLOSURE OF THE INVENTION

PROBLEMS TO BE RESOLVED BY THE INVENTION

By the way, the above motion prediction and compensation mode includes a "direct" mode and a "skip" mode performing prediction based on the motion vectors of block data around block data to be processed and thereby not encoding any motion vectors.

However, sometimes even when the predicted motion vector is very different from the original motion vector, the Direct mode or the Skip mode gives the smallest code amount and therefore is selected. In such a case, jerky motion occurs in the decoded image due to the difference of motion vectors and becomes a cause of deterioration of the image quality.

Further, if the mode is selected in units of macro blocks based on only the code amounts of entire macro blocks, if the code amount of a small part of the blocks in a macro block is large and the code amount of the far greater rest of the blocks is small, the code amount of the entire macro block will become small and a mode unsuitable from the viewpoint of the image quality will end up being selected for the encoding of the small part of the blocks.

It is therefore desirable to provide an image processing apparatus able to realize encoding giving a higher image quality in comparison with the past, a program for the same, and a method of the same.

MEANS FOR SOLVING THE PROBLEMS

To achieve the above objects, an image processing apparatus of a first invention, used for generating a motion vector of block data of a block covered by processing among a plurality of blocks defined in a two-dimensional image region and encoding the motion vector and a difference between prediction block data generated based on the motion vector and the block data covered by the processing, includes a judging means for judging whether or not the difference between motion vectors generated for each of a first mode of predicting the motion vector of the block data covered by the processing from the motion vector of other block data and not encoding the predicted motion vector and a second mode of generating the motion vector of the block data covered by the processing based on the difference between the block data covered by the processing and the block data in a reference image data and encoding the motion vector and difference image data between the block data covered by the processing and the reference block data corresponding to the generated motion vector in the reference image data exceeds a predetermined standard; and a selecting means for selecting the second mode when the judging means judges that the difference exceeds the predetermined standard and selecting a mode between the first mode and the second mode in which the code amount by the encoding becomes the minimum when the judging means judges that the difference does not exceed the predetermined standard.

The mode of operation of the image processing apparatus of the first invention is as follows.

First, the judging means generates the motion vector of block data covered by the processing based on the first mode of predicting the motion vector of the block data covered by the processing from the motion vector of other block data and not encoding the predicted motion vector and the difference between the block data covered by the processing and the block data in the reference image data.

Then, the judging means judges whether or not the difference between the above generated motion vector and the motion vector generated for the second mode of encoding the difference image data between the block data covered by the processing and the reference block data corresponding to the above generated motion vector in the reference image data exceeds a predetermined standard.

Next, the selecting means selects the second mode when the judging means judges that the difference exceeds the predetermined standard and selects the mode between the first mode and the second mode in which the code amount by the encoding becomes the minimum when the judging means judges that the difference does not exceed the predetermined standard.

A program, a second present invention for making a computer execute processing for generating a motion vector of block data of a block covered by the processing among a plurality of blocks defined in a two dimensional image region and encoding the motion vector and a difference between prediction block data generated based on the motion vector and the block data covered by the processing, includes a first routine of generating the motion vector for each of a first mode of predicting the motion vector of the block data covered by the processing from the motion vector of the other block data and not encoding the predicted motion vector and a second mode of generating the motion vector of the block data covered by the processing based on the difference between the block data covered by the processing and the block data in a reference image data and encoding the motion vector and a difference image data between the block data covered by the processing and the reference block data corresponding to the generated motion vector in the reference image data; a second routine of judging whether or not the difference between the motion vector of the first mode generated in the first routine and the motion vector of the second mode exceeds a predetermined standard; and a third routine of selecting the second mode when judging that the difference exceeds the predetermined standard in the second routine and selecting the mode between the first mode and the second mode in which the code amount by the encoding becomes the minimum when judging that the difference does not exceed the predetermined standard.

The mode of operation of the program of the second invention is as follows.

First, the computer executes the program.

Then, the computer generates the Motion vector according to the first routine of the program for each of a first mode of predicting the motion vector of the block data covered by the processing from the motion vector of the other block data and not encoding the predicted motion vector and a second mode of generating the motion vector of the block data covered by the processing based on the difference between the block data covered by the processing and the block data in a reference image data and encoding the motion vector and a difference image data between the block data covered by the processing and the reference block data corresponding to the generated motion vector in the reference image data.

Next, the computer judges whether or not the difference between the motion vector of the first mode generated in the first routine and the motion vector of the second mode generated in the first routine exceeds the predetermined standard according to the second routine of the program.

Next, according to the third routine, the computer selects the second mode when judging that the difference exceeds the predetermined standard in the second routine and selects the mode between the first mode and the second mode in which the code amount by the encoding becomes the minimum when judging that the difference does not exceed the predetermined standard.

An image processing method of a third present invention includes: having a computer executes processing for generating a motion vector of block data of a block covered by processing among a plurality of blocks defined in a two-dimensional image region and encoding the motion vector and a difference between prediction block data generated based on the motion vector and the block data covered by the processing, a first process of generating the motion vector for each of a first mode of predicting the motion vector of the block data covered by the processing from the motion vector of other block data and not encoding the predicted motion vector and a second mode of generating the motion vector of the block data covered by the processing based on the difference between the block data covered by the processing and the block data in a reference image data and encoding the motion vector and difference image data between the block data covered by the processing and the reference block data corresponding to the generated motion vector in the reference image data, a second process of judging whether or not the difference between the motion vector of the first mode generated in the first process and the motion vector of the second mode exceeds a predetermined standard, and a third process of selecting the second mode when judging that the difference exceeds the predetermined standard in the second process and selecting the mode between the first mode and the second mode in which the code amount by the encoding becomes the minimum when judging that the difference does not exceed the predetermined standard.

An image processing apparatus of a fourth present invention used for encoding block data of a block covered by processing among one or more blocks forming a macro block defined in a two-dimensional image region based on that block data and prediction block data of the block data, includes: a generating means for generating first indicator data in accordance with a difference between one or more unit block data forming the block data covered by the processing and unit block data in prediction block data corresponding to this unit block data in units of the unit block data, specifying first indicator data indicating the maximum data among the first indicator data, and generating second indicator data in which the specified first indicator data is strongly reflected as a value in comparison with a sum of the first indicator data generated for the unit block data forming the block data covered by the processing based on the first indicator data; and a selecting means for selecting the mode giving the smallest third indicator data in accordance with the sum of the second indicator data generated by the generating means for the one or more block data forming a macro block covered by the processing among a plurality of modes in which at least one of the size of the block data defined for the macro block covered by the processing, existence of encoding of the motion vector, and existence of encoding of the difference are different from each other.

The mode of operation of the image processing apparatus of the fourth invention is as follows.

First, the generating means generates first indicator data in accordance with the difference between the unit block data and the unit block data in the prediction block data corresponding to this unit block data in units of one or more unit block data forming the block data covered by the processing, specifies the first indicator data indicating the maximum data among the first indicator data, and generates second indicator data in which the specified first indicator data is strongly reflected as a value in comparison with the sum of the first indicator data generated for the unit block data forming the block data covered by the processing based on the first indicator data.

Next, the selecting means selects the mode giving the smallest third indicator data in accordance with the sum of the second indicator data generated by the generating means for the one or more block data forming the macro block covered by the processing among a plurality of modes in which at least one of the size of the block data defined for the macro block covered by the processing, existence of encoding of the motion vector, and existence of encoding of the difference are different from each other.

A program of a fifth present invention for making a computer execute processing for encoding block data of a block covered by processing among one or more blocks forming a macro block defined in a two-dimensional image region based on the block data and prediction block data of the block data, includes: a first routine of generating first indicator data in accordance with a difference between one or more unit block data forming the block data covered by the processing and unit block data in prediction block data corresponding to this unit block data in units of the unit block data; a second routine of specifying the first indicator data indicating the maximum data among the first indicator data generated in the first routine; a third routine of generating second indicator data in which the first indicator data specified in the second routine is strongly reflected as a value in comparison with the sum of the first indicator data generated for the unit block data forming the block data covered by the processing based on the first indicator data generated in the first routine; and a fourth routine of selecting the mode giving the smallest third indicator data in accordance with the sum of the second indicator data generated in the third routine for the one or more block data forming the macro block covered by the processing among a plurality of modes in which at least one of the size of the block data defined for the macro block covered by the processing, existence of encoding of the motion vector, and existence of encoding of the difference are different from each other.

The mode of operation of the program of the fifth invention is as follows.

First, the computer executes the program of the fifth invention.

Then, the computer generates the first indicator data in accordance with the difference between one or more unit block data forming the block data covered by the processing and the unit block data in the prediction block data corresponding to the unit block data in units of the unit block data according to the first routine of the program.

Next, the computer specifies the first indicator data indicating the maximum data among the first indicator data generated in the first routine according to the second routine of the program.

Next, the computer generates the second indicator data in which the first indicator data specified in the second routine is strongly reflected as a value in comparison with the sum of the first indicator data generated for the unit block data forming the block data covered by the processing based on the first indicator data generated in the first routine according to the third routine of the program.

Next, the computer selects the mode giving the smallest third indicator data in accordance with the sum of the second indicator data generated in the third routine for the one or more block data forming the macro block covered by the processing among a plurality of modes in which at least one of the size of the block data defined for the macro block covered by the processing, existence of encoding of the motion vector, and existence of encoding of the difference are different from each other according to the fourth routine of the program.

An image processing method of a sixth present invention includes: having a computer execute processing for encoding block data of a block covered by the processing among one or more blocks forming a macro block defined in the two-dimensional image region based on the block data and the prediction block data of the block data, includes: a first process of generating first indicator data in accordance with the difference between one or more unit block data forming the block data covered by the processing and the unit block data in the prediction block data corresponding to this unit block data in units of the unit block data; a second process of specifying the first indicator data indicating the maximum data among the first indicator data generated in the first process; a third process of generating second indicator data in which the first indicator data specified in the second process is strongly reflected as a value in comparison with the sum of the first indicator data generated for the unit block data forming the block data covered by the processing based on the first indicator data generated in the first process; and a fourth process of selecting the mode giving the smallest third indicator data in accordance with the sum of the second indicator data generated in the third process for the one or more block data forming the macro block covered by the processing among a plurality of modes in which at least one of the size of the block data defined for the macro block covered by the processing, existence of encoding of the motion vector, and existence of encoding of the difference are different from each other.

EFFECT OF THE INVENTION

According to the present invention, an image processing apparatus able to realize encoding with a higher image quality than the past, a program for the same, and a method of the same, may be provided.

BRIEF DESCRIPTION OF THE DRAWINGS

[FIG.1] FIG.1 is a view of the configuration of a communication system of a first embodiment of the present invention.

[FIG.2] FIG.2 is a functional block diagram of a coding device shown in FIG.1.

[FIG.3] FIG.3 is a diagram for explaining a motion prediction and compensation circuit shown in FIG.1.

[FIG.4] FIG.4 is a diagram for explaining a hardware configuration of the motion prediction and compensation circuit shown in FIG.1.

[FIG.5] FIG.5 is a flow chart for explaining an example of the operation of the motion prediction and compensation circuit shown in FIG.1.

[FIG.6] FIG.6 is a flow chart continuing from FIG.5 for explaining an example of the operation of the motion prediction and compensation circuit shown in FIG.1.

[FIG.7] FIG.7 is a diagram for explaining modification of the first embodiment of the present invention.

[FIG.8] FIG.8 is a functional block diagram of a coding device of a second embodiment of the present invention.

[FIG.9] FIG.9 is a diagram for explaining a hardware configuration of an intra-prediction circuit shown in FIG.8.

[FIG.10] FIG.10 is a flow chart for explaining an example of the operation of the intra-prediction circuit shown in FIG.8.

[FIG.11] FIG.11 is a diagram for explaining another hardware configuration of the intra-prediction circuit shown in FIG.8

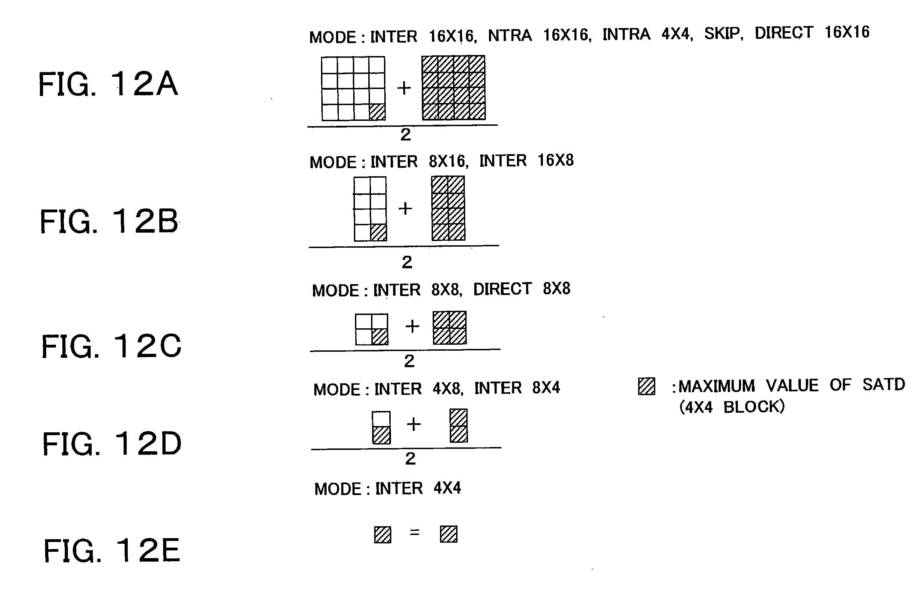

.[FIG.12] FIG.12 is a diagram for explaining a method for calculating indicator data SATDa in the second embodiment of the present invention.

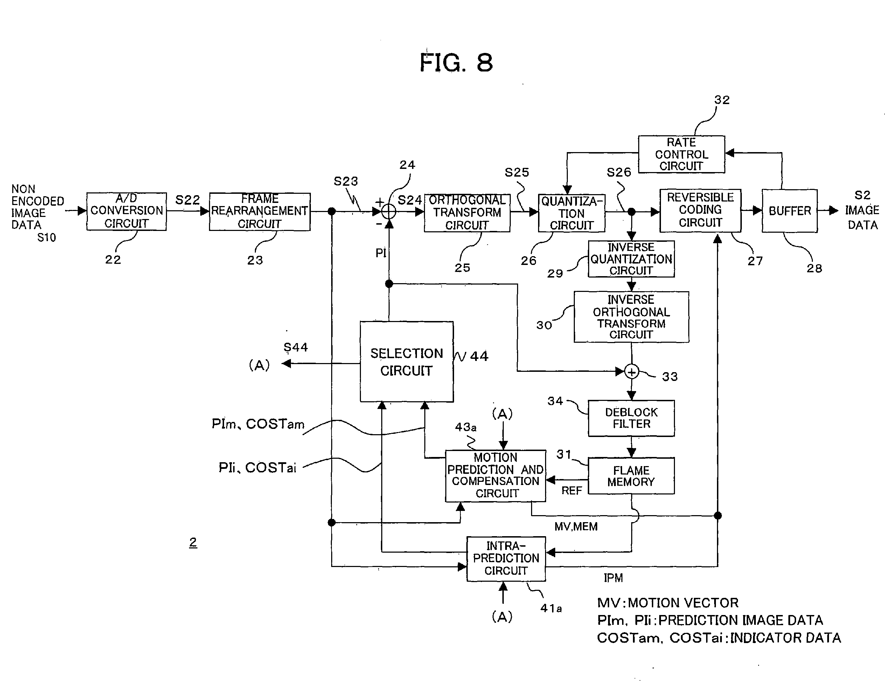

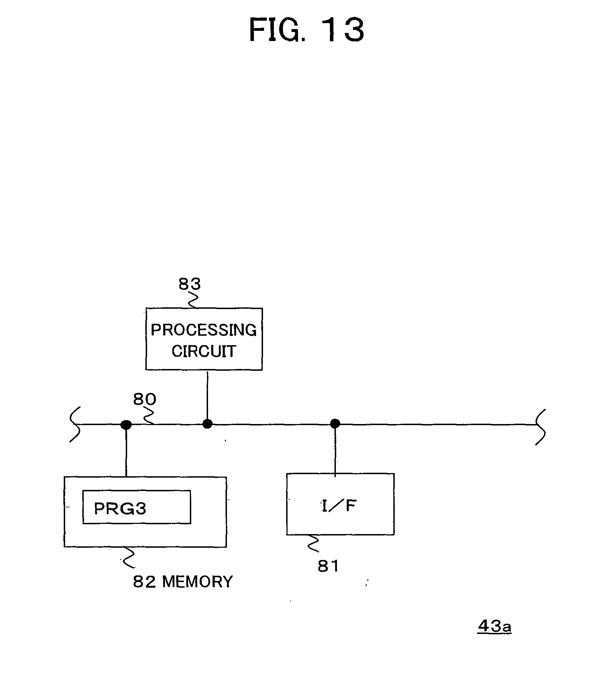

[FIG.13] FIG.13 is a diagram for explaining a hardware configuration of the motion prediction and compensation circuit shown in FIG.8.

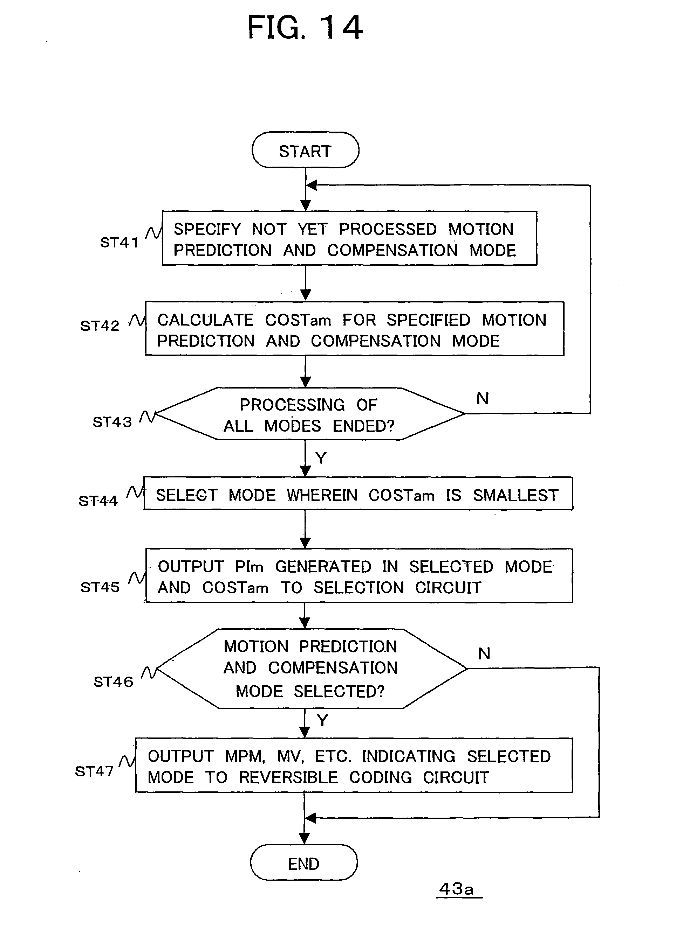

[FIG.14] FIG.14 is a flow chart for explaining an example of the operation of the motion prediction and compensation circuit shown in FIG.8.

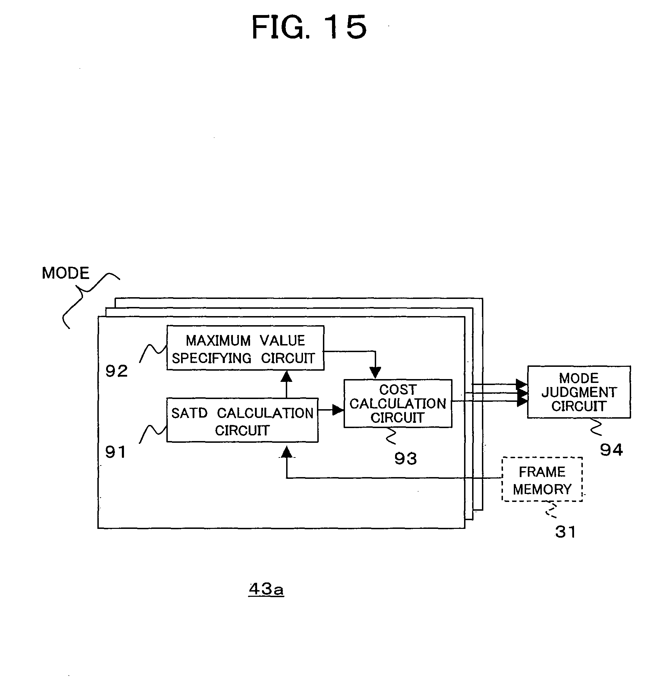

[FIG.15] FIG. 15 is a diagram for explaining another hardware configuration of the motion prediction and compensation circuit shown in FIG. 8.

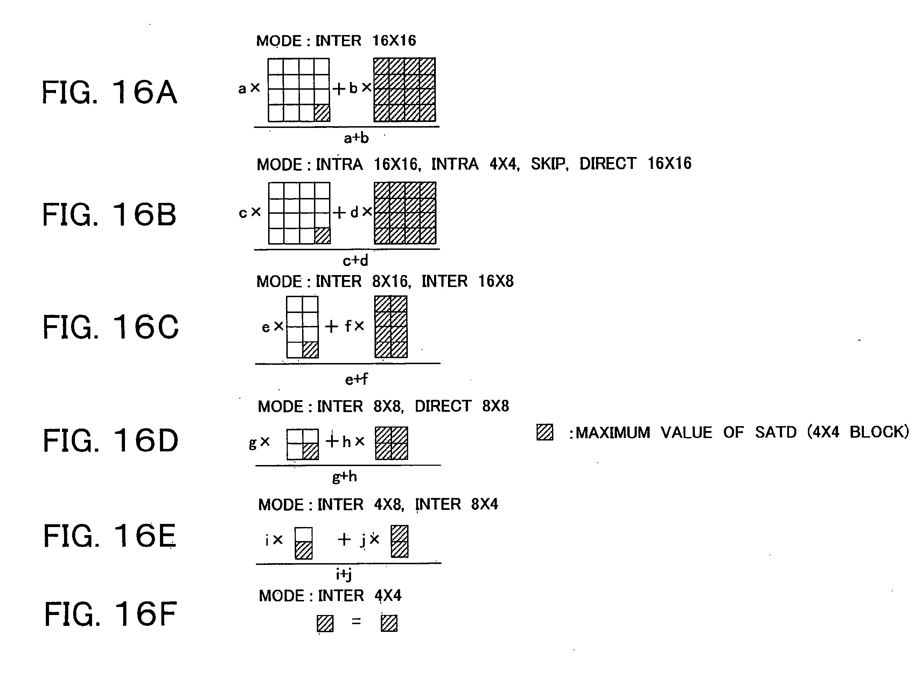

[FIG. 16] FIG. 16 is a diagram for explaining another method of calculation of the indicator data SATDa in the second embodiment of the present invention.

DESCRIPTION OF NOTATION

1 ... communication system, 2...the coding device, 3...decoding device, 22...conversion circuit, 23...frame rearrangement circuit, 24...computation circuit, 25...orthogonal transform circuit, 26...quantization circuit, 27...reversible coding circuit, 28...buffer, 29...inverse quantization circuit, 30...inverse orthogonal transform circuit, 31...frame memory, 32...rate control circuit, 33...adder circuit, 34...deblock filter, 41...intra-prediction circuit, 43...motion prediction and compensation circuit, 44...selection circuit.

BEST MODE FOR CARRYING OUT THE INVENTION

Below, an explanation will be given of coding devices according to embodiments of the present invention.

<First Embodiment>

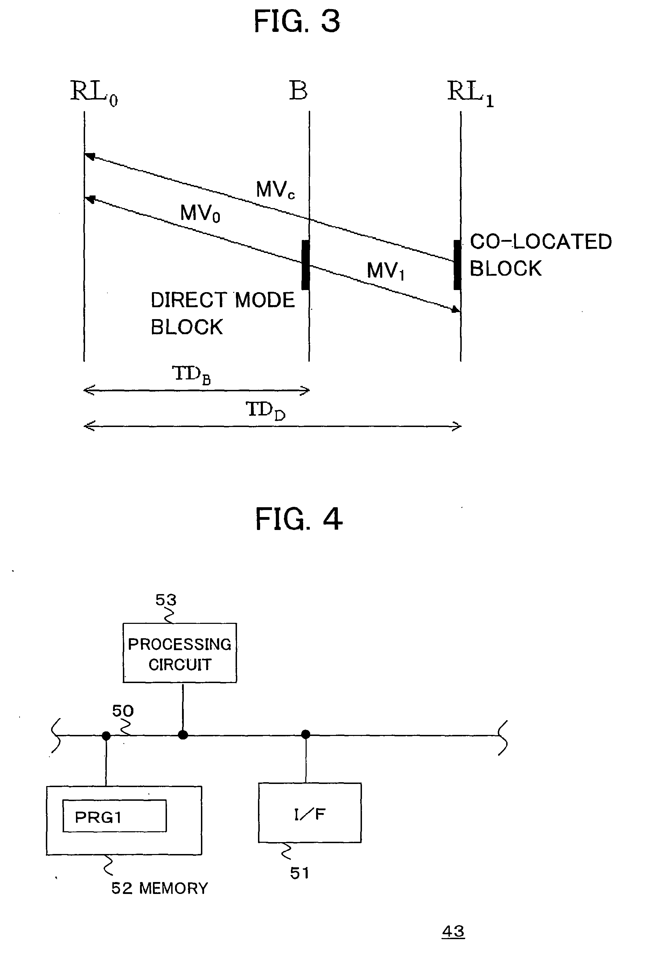

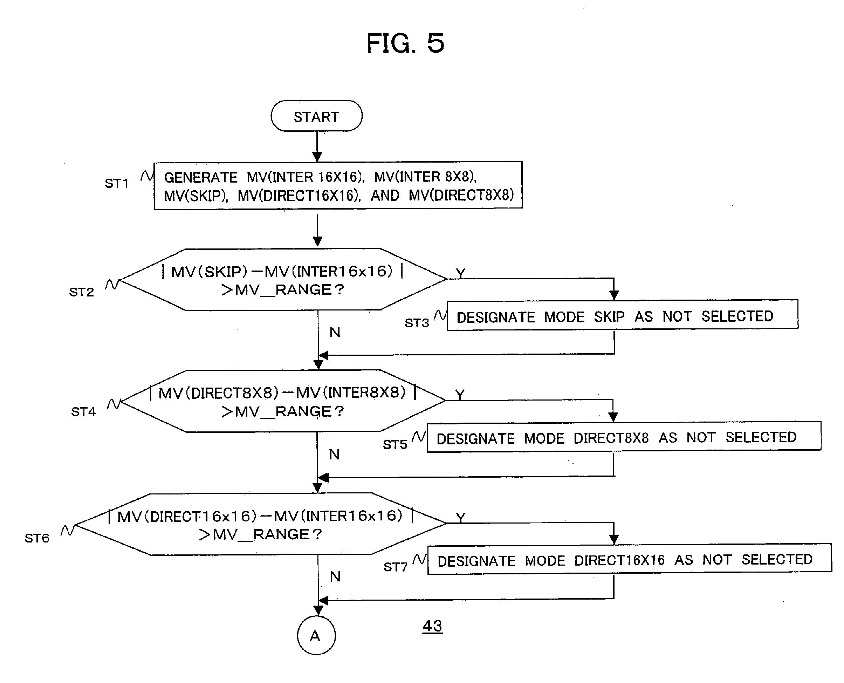

The first embodiment is an embodiment corresponding to the first to third invention.
First, an explanation will be given of the relationship between the components of the present embodiment and the components of the present invention.
A processing circuit 53 of a motion prediction and compensation circuit 43 shown in FIG. 4 executes steps ST2, ST4, and ST6 shown in FIG. 5, whereby the judging means of the first invention is realized.
By the processing circuit 53 executing steps ST3, ST5, ST7, ST8, and ST9 shown in FIG. 5, the selecting means of the first invention is realized.
Steps ST2, ST4, and ST6 shown in FIG. 5 correspond to the first routine of the second invention and the first process of the third invention.
Steps ST3, ST5, ST7, ST8, and ST9 shown in FIG. 5 correspond to the second routine of the second invention and the second process of the third invention.
A program PRG1 of the present embodiment corresponds to the program of the second invention.
The Skip mode and Direct mode correspond to the first mode of the present invention. Inter base modes such as the inter 16x16 mode, inter 8x16 mode, inter 16x8 mode, inter 8x8 mode, inter 4x8 mode, and inter 4x4 mode correspond to the second mode of the present invention.
The block data of the present embodiment corresponds to the block data of the present invention. Image data S26 corresponds to the difference image data of the present invention.
Note that, in the present embodiment, the image data and the reference image data are for example frame data or field data.
Below, an explanation will be given of a communication system 1 of the present embodiment.

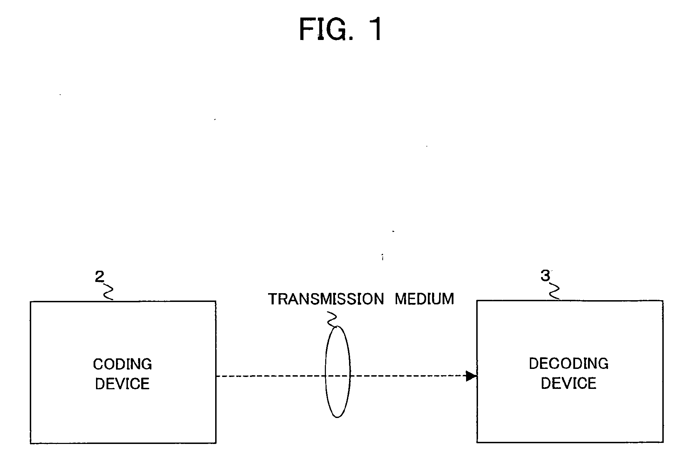

FIG. 1 is a conceptual view of the communication system 1 of the present embodiment.
As shown in FIG. 1, the communication system 1 has a coding device 2 provided on a transmission side and a decoding device 3 provided on a reception side.
The coding device 2 corresponds to the data processing apparatus and the coding device of the present invention.
In the communication system 1, the coding device 2 on the transmission side generates frame image data (bit stream) compressed by a discrete cosine transform, Karhunen-Loewe transform, or other orthogonal transform and motion compensation, modulates the frame image data, then transmits the same via a satellite broadcast wave, cable TV network, telephone line network, cell phone line network, or other transmission medium.
On the reception side, the decoding device 3 demodulates the received image signal, then generates and uses the frame image data decompressed by the inverse transform to the orthogonal transform at the time of modulation and the motion compensation.
Note that the transmission medium may be an optical disk, magnetic disk, semiconductor memory, or other storage medium as well.
The decoding device 3 shown in FIG. 1 has the same configuration as that in the related art and performs decoding corresponding to the encoding of the coding device 2.
Below, an explanation will be given of the coding device 2 shown in FIG. 1.

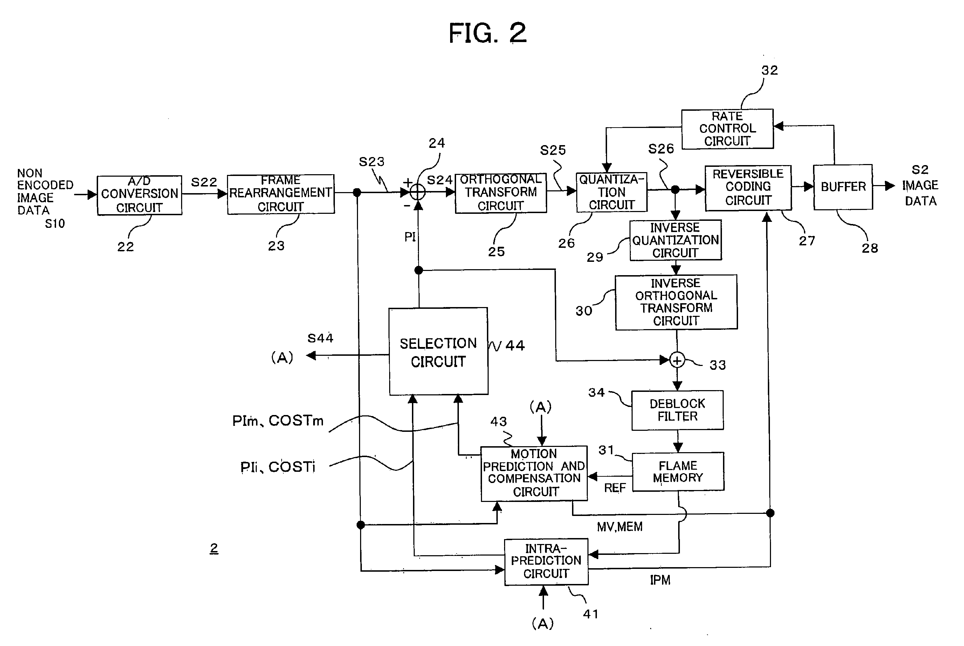

FIG. 2 is a view of the overall configuration of the coding device 2 shown in FIG. 1.
As shown in FIG. 2, the coding device 2 has for example an analog/digital (A/D) conversion circuit 22, frame rearrangement circuit 23, computation circuit 24, orthogonal transform circuit 25, quantization circuit 26, reversible coding circuit 27, buffer 28, inverse quantization circuit 29, inverse orthogonal transform circuit 30, frame memory 31, rate control circuit 32, adder circuit 33, deblock filter 34, intra-prediction circuit 41, motion prediction and compensation circuit 43, and selection circuit 44.
Below, an explanation will be given of components of the coding device 2.
The A/D conversion circuit 22 converts an original image signal formed by an input analog luminance signal Y and color difference signals Pb and Pr to a digital image signal and outputs this to the frame rearrangement circuit 23.

The frame rearrangement circuit 23 rearranges the frame image signal in the original image signal input from the A/D conversion circuit 22 to a sequence for encoding in accordance with a GOP (Group Of Pictures) structure composed of picture types I, P, and B to obtain the original image data S23 and outputs the same to the computation circuit 24, the motion prediction and compensation circuit 43, and the intra-prediction circuit 41.

The computation circuit 24 generates image data S24 indicating a difference between the original image data S23 and the predicted image data PI input from the selection circuit 44 and outputs this to the orthogonal transform circuit 25.

The orthogonal transform circuit 25 applies a discrete cosine transform, Karhunen-Loewe transform, or other orthogonal transform to the image data S24 to generate the image data (for example, DCT coefficient) S25 and outputs this to the quantization circuit 26.

The quantization circuit 26 quantizes the image data S25 with a quantization scale input from the rate control circuit 32 to generate the image data S26 (quantized DCT coefficient) and outputs this to the reversible coding circuit 27 and the inverse quantization circuit 29.

The reversible coding circuit 27 encodes the image data S26 by variable length encoding or arithmetic encoding and stores the obtained image data in the buffer 28.

At this time, the reversible coding circuit 27 stores a motion vector MV input from the motion prediction and compensation circuit 43 or the difference motion vector thereof, identification data of the reference image data, and the intra-prediction mode IPM input from the intra-prediction circuit 41 in the header data etc.

The image data stored in the buffer 28 is modulated and then transmitted.

The inverse quantization circuit 29 applies inverse quantization to the image data S26 and outputs the obtained data to the inverse orthogonal transform circuit 30.

The inverse orthogonal transform circuit 30 applies an inverse transform to the orthogonal transform in the orthogonal transform circuit 25 to the data input from the inverse quantization circuit 29 and outputs the thus generated image data to the adder circuit 33.

The adder circuit 33 adds the image data input (decoded) from the inverse orthogonal transform circuit 30 and the predicted image data PI input from the selection circuit 44 to generate recomposed image data and outputs this to the deblock filter 34.

The deblock filter 34 eliminates block distortion of the recomposed image data input from the adder circuit 33 and writes the image data as the reference image data REF into the frame memory 31.

Note that the frame memory 31 is sequentially written with the recomposed image data of pictures covered by the motion prediction and compensation processing by the motion prediction and compensation circuit 43 and the intra-prediction processing in the intra-prediction circuit 41 in units of macro blocks MB finished being processed.

The rate control circuit 32 generates for example a quantization scale based on the image data read out from the buffer 28 and outputs this to the quantization circuit 26.

Below, a detailed explanation will be given of the intra-prediction circuit 41 and the motion prediction and compensation circuit 43.

[Intra-prediction Circuit 41]

The intra-prediction circuit 41 generates prediction image data PIi of macro blocks MB covered by processing for a plurality of prediction modes such as the intra 4x4 mode and intra 16x16 mode and generates indicator data COSTi serving as indicators of the code amounts of the encoded data based on these and the macro blocks MB covered by the processing in the original image data S23.

Then, the intra-prediction circuit 41 selects the intra-prediction mode giving the smallest indicator data COSTi.

The intra-prediction circuit 41 outputs the prediction image data PIi and the indicator data COSTi generated corresponding to the finally selected intra-prediction mode to the selection circuit 44.

When the intra-prediction circuit 41 receives as input a selection signal S44 indicating that the intra-prediction mode was selected, it outputs the prediction mode IPM indicating the finally selected intra-prediction mode to the reversible coding circuit 27.

Note that even macro blocks MB belonging to the P slice or B slice are sometimes coded intra-prediction coding by the intra-prediction circuit 41.

The intra-prediction circuit 41 generates for example the indicator data COSTi based on the following Equation (1).

[Equation 1]

$$COSTi = \sum_{1 \leq i \leq x} (SATD + header\_cost(mode)) \quad \cdots(1)$$

Further, in the above Equation (1), "i" is for example an identification number added to each block data of sizes corresponding to the intra-prediction modes forming the macro block MB covered by the processing. The "x" in the above Equation (1) is "1" in the case of the intra 16x16 mode and "16" in the case of the intra 4x4 mode.

The intra-prediction circuit 41 calculates "SATD+header_cost (mode))" for all block data forming the macro block MB covered by the processing and adds them to calculate the indicator data COSTi.

The "header_cost (mode)" is indicator data serving as the indicator of the code amount of the header data including the motion vector after the coding, the identification data of the reference image data, the selected mode, the quantization parameter (quantization scale), etc. The value of "header_cost (mode)" differs according to the prediction mode.

Further, "SATD" is indicator data serving as the indicator of the code amount of the difference image data between the block data in the macro block MB covered by the processing and previously determined block data (prediction block data) around the block data. In the present embodiment, the prediction image data PIi is defined according to one or more prediction block data.

SATD is the data after applying a Hadamard transform (Tran) to the sum of the absolute differences between pixel data of block data Org covered by the processing and prediction block data Pre.

Pixels in the block data are designated by s̲ and t̲ in the following Equation (2).

[Equation 2]

$$SATD = \sum_{s, t} (\,|\,Tran(Org(s, t) - Pre(s, t))\,|\,) \quad \cdots(2)$$

Note that, the SAD shown in the following Equation (3) may be used in place of the SATD.

Further, another indicator representing distortion or residue such as the SSD defined in the MPEG4 and AVC may be used in place of SATD as well.

[Equation 3]

$$SAD = \sum_{s, t} (\,|\,Org(s, t) - Pre(s, t)\,|\,) \quad \cdots(3)$$

[Motion Prediction and Compensation Circuit 43]

When a macro block MB covered by the processing of the original image data S23 input from the frame rearrangement circuit 23 is inter-encoded, the motion prediction and compensation circuit 43 generates a motion vector MV and prediction image data of block data covered by the processing in units of block data defined by the motion prediction and compensation mode based on the reference image data REF encoded in the past and stored in the frame memory 31 for each of the plurality of motion prediction and compensation modes.

The size of the block data and the reference image data REF are defined by for example the motion prediction and compensation mode.

Further, the motion prediction and compensation circuit 43 generates indicator data COSTm serving as the indicator of the code amount of the encoded data based on the macro block MB covered by the processing in the original image data S23 and the prediction block data (prediction image data PIm) thereof for each of the motion prediction and compensation modes.

Then, the motion prediction and compensation circuit 43 selects the motion prediction and compensation mode giving the smallest indicator data COSTm.

The motion prediction and compensation circuit 43 outputs the prediction image data PIm and the indicator data COSTm generated corresponding to the finally selected motion prediction and compensation mode to the selection circuit 44.

Further, the motion prediction and compensation circuit 43 outputs the motion vector generated corresponding to the finally selected motion prediction and compensation mode or the difference motion vector between the motion vector and the prediction motion vector to the reversible coding circuit 27.

Still further, the motion prediction and compensation circuit 43 outputs a motion prediction and compensation mode MEM indicating the finally selected motion prediction and compensation mode to the reversible coding circuit 27.

Finally, the motion prediction and compensation circuit 43 outputs the reference image data (reference frame) selected in the motion prediction and compensation processing to the reversible coding circuit 27.

The motion prediction and compensation circuit 43 generates for example the indicator data COSTm based on the following Equation (4

[Equation 4]

$$COSTm = \sum_{1 \leq i \leq x} (SATD + header\_cost(mode)) \quad ...(4)$$

Further, in the above Equation (4), "i" is for example the identification number added to each block data of sizes of the motion prediction and compensation modes forming a macro block MB covered by the processing.

Namely, the motion prediction and compensation circuit 43 calculates "(SATD+head_cost (mode))" for all block data forming the macro block MB covered by the processing and adds them to calculate the indicator data COSTm.

The "head_cost(mode)" is indicator data serving as an indicator of the code amount of the header data including the motion vector after coding, identification data of the reference image data, selected mode, quantization parameter (quantization scale), etc. The value of "header_cost (mode)" differs according to the motion prediction and compensation mode.

Further, SATD is indicator data serving as the indicator of the code amount of the difference image data between the block data in a macro block MB covered by the processing and the block data in reference image data (reference block data) designated by the motion vector MB.

In the present embodiment, the prediction image data PIm is defined by one or more reference block data.

SATD is the data after applying a Hadamard transform (Tran) to the sum of the absolute differences between the pixel data of the block data Org covered by the processing and the reference block data (prediction image data) Pre. The pixels in the block data are designated according to $\underline{s}$ and $\underline{t}$ of the following Equation (5).

[Equation 5]

$$SATD = \sum_{s, t} (|Tran(Org(s, t) - Pre(s, t))|) \quad ...(5)$$

Note that, in place of SATD, SAD shown in the following Equation (6) of the first embodiment may be used as well. Further, in place of SATD, the other indicator representing the distortion or residue such as SSD defined in MPEG4 and AVC may be used as well.

〔Equation 6〕

$$SAD = \sum_{s, t} \left( \mid Org(s, t) - Pre(s, t) \mid \right)$$

$$... (6)$$

In the present embodiment, the motion prediction and compensation circuit 43 is provided with various modes, for example, the inter base mode, Skip mode, and Direct mode, as the motion prediction and compensation mode.

The inter base mode includes the inter 16x16 mode, inter 8x16 mode, inter 16x8 mode, inter 8x8 mode, inter 4x8 mode, and inter 4x4 mode. The sizes of the block data of them are 16x16, 8x16, 16x8, 8x8, 4x8, and 4x4.

Further, a forward prediction mode, a backward prediction mode, or a bi-directional prediction mode may be selected for the size of each of the inter base modes.

Here, the forward prediction mode is a mode using image data having a future display order as the reference image data, the backward prediction mode is a mode using image data having a past display order as the reference image data, and the bi-directional prediction mode is a mode using image data having future and past display orders as the reference image data.

In the present embodiment, a plurality of reference image data may be used in the motion prediction and compensation processing by the motion prediction and compensation circuit 43.

The motion prediction and compensation circuit 43 encodes the motion vector or the difference motion vector thereof and the quantized difference image data constituted by the image data S26 in the reversible coding circuit 27 and includes them in the image data S2 in the inter base mode.

Next, an explanation will be given of the Skip mode.

When the Skip mode is finally selected, the reversible coding circuit 27 of the coding device 2 does not encode any of the information of the image data S26 and the motion vector MV, that is, does not include it in the image data S2.

Note that the reversible coding circuit 27 includes the motion prediction and compensation mode selected by the motion prediction and compensation circuit 43 in the image data S2.

The decoding device 3 generates a prediction motion vector based on the motion vectors of the block data around the block data covered by the processing when the motion prediction and compensation mode included in the image data S2 indicates the Skip mode and generates the decoded image data based on this prediction motion vector. The Skip mode does not encode either the image data S26 or the motion vector, so is able to remarkably reduce the coded data amount.

The Skip mode may also be selected for the P pictures in addition to the B pictures.

Next, an explanation will be given of the Direct mode.

When the Direct mode is finally selected, the reversible coding circuit 27 of the coding device 2 does not encode the motion vector MV.

Note that the reversible coding circuit 27 encodes the motion prediction and compensation mode and the image data S26.

When the motion prediction and compensation mode included in the image data S2 indicates the Direct mode, the decoding device 3 generates a prediction motion vector based on the motion vectors of the block data around the block data covered by the processing and generates decoded image data based on this prediction motion vector and the encoded image data S26.

The Direct mode does not encode the motion vector, therefore can reduce the coded data amount.

The Skip mode may be selected for the B pictures.

The Direct mode includes the 16x16 Direct mode using a block size of 16x16 and the 8x8 Direct mode using a block size of 8x8.

Further, each of the 16x16 Direct mode and the 8x8 Direct mode includes a Spatial Direct mode and a Temporal Direct mode.

The motion prediction and compensation circuit 43 generates a prediction motion vector (motion vector) by using the motion vectors of the block data around the block data covered by the processing in the case of the Spatial Direct mode.

Then, the motion prediction and compensation circuit 43 specifies the reference block data based on the prediction motion vector and generates the reference image data PIm.

Further, the motion prediction and compensation circuit 43 generates the prediction motion vector (motion vector) by using the motion vector of the block data at a corresponding location in the reference image data of the block data covered by the processing in the case of the Temporal Direct mode.

The motion prediction and compensation circuit 43 specifies the reference block data based on the prediction motion vector and generates the reference image data PIm.

The decoding device 3 calculates motion vectors $MV_0$ and $MV_1$ according to the following Equations (7) and (8) when the Temporal Direct mode is designated, for example, the block data covered by the processing in the frame data B uses frame data $RL_0$ and $RL_1$ as the reference image data, and the motion vector with respect to the frame data $RL_0$ of the block data at the corresponding location in the frame data $RL_1$ is MVc as shown in FIG. 3.

In the following Equations (7) and (8), $TD_D$ indicates an interval of the display timing between the reference image data $RL_0$ and the reference image data $RL_1$, and $TD_B$ indicates the interval of the display timing between the frame data B and the reference image data $RL_0$.

[Equation 7]

$$MV_0 = (TD_B / TD_D) * MV_C$$

$$... (7)$$

[Equation 8]

$$MV_1 = ((TD_D - TD_B) / TD_D) * MV_C$$

$$... (8)$$

FIG. 4 shows an example of the hardware configuration of the motion prediction and compensation circuit 43.
As shown in FIG. 4, the motion prediction and compensation circuit 43 has for example an interface 51, a memory 52, and a processing circuit 53 all connected via a data line 50.
The interface 51 performs the input/output of data with the frame rearrangement circuit 23, the reversible coding circuit 27, and the frame memory 31.
The memory 52 stores the program PRG1 and various data used for the processing of the processing circuit 53.
The processing circuit 53 centrally controls the processing of the motion prediction and compensation circuit 43 according to the program PRG1 read out from the memory 52.
Below, an explanation will be given of an example of the operation of the motion prediction and compensation circuit 43.
The operation of the motion prediction and compensation circuit 43 shown below is controlled by the processing circuit 53 according to the program PRG1.

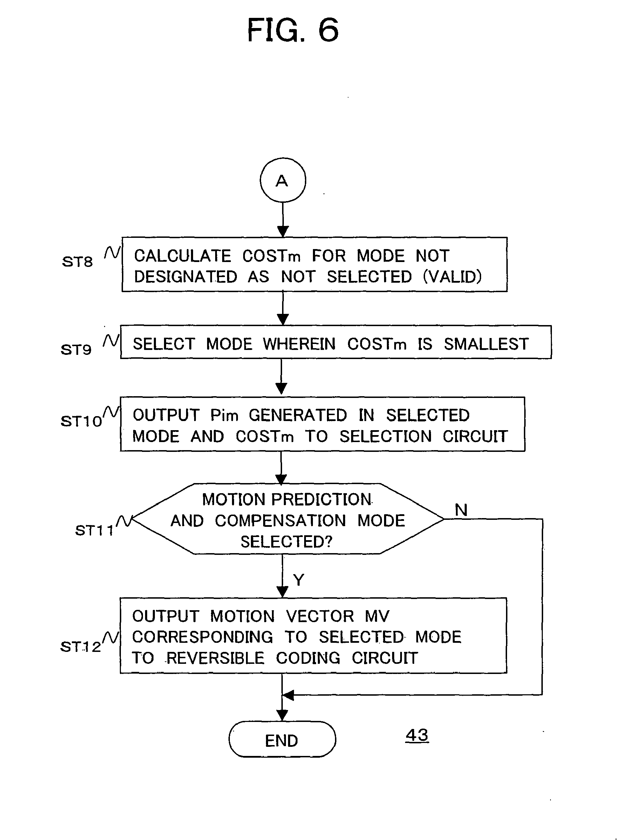

FIG. 5 and FIG. 6 are flow charts for explaining the example of the operation of the motion prediction and compensation circuit 43.
The motion prediction and compensation circuit 43 performs the following processing for the block data covered by the processing in the original image data S23.

Step ST1

The motion prediction and compensation circuit 43 generates the motion vectors MV (inter 16x16), MV (inter 8x8), MV (Skip), MV (Direct16x16), and MV (Direct8x8) of the block data covered by the processing in the above-explained sequence for each of the inter 16x16, inter 8x8, Skip, Direct16x16, and Direct8x8.

Step ST2

The motion prediction and compensation circuit 43 judges whether or not the absolute value of the difference vector between a motion vector MV (skip) and a motion vector MV (inter 16x16) generated at step ST1 is larger than a previously determined standard value MV_RANGE, proceeds to step ST3 when judging that the absolute value is larger than the standard value, and proceeds to step ST4 when not judging so.

Step ST3

The motion prediction and compensation circuit 43 determines that the Skip mode is not selected in the selection processing of the motion prediction and compensation mode explained later.

Step ST4

The motion prediction and compensation circuit 43 judges whether or not the absolute value of the difference vector between a motion vector MV (Direct8x8) and a motion vector MV (inter 8x8) generated at step ST1 is larger than the previously determined standard value MV_RANGE, proceeds to step ST5 when judging that the absolute value is larger than the standard value, and proceeds to step ST6 when not judging so.

Step ST5

The motion prediction and compensation circuit 43 determines that the Direct8x8 mode is not selected in the selection processing of the motion prediction and compensation mode explained later.

Step ST6

The motion prediction and compensation circuit 43 judges whether or not the absolute value of a difference vector between the motion vector MV (Direct16x16) and the motion vector MV (inter 16x16) generated at step ST1 is larger than a previously determined standard value MV_RANGE, proceeds to step ST7 when judging that the absolute value is larger than the standard value, and proceeds to step ST8 when not judging so.

Step ST7

The motion prediction and compensation circuit 43 determines that the Direct16x16 mode is not selected in the selection processing of the motion prediction and compensation mode explained later.

Step ST8

The motion prediction and compensation circuit 43 calculates the indicator data COSTm by the above routines for the motion prediction and compensation mode not designated as not selected by steps ST3, ST5, and ST7.

Step ST9

The motion prediction and compensation circuit 43 selects the motion prediction and compensation mode giving the smallest indicator mode COSTm calculated at step ST8.

Step ST10

The motion prediction and compensation circuit 43 outputs the prediction image data PIm and the indicator data COSTm generated corresponding to the selected motion prediction and compensation mode to the selection circuit 44.

Step ST11

The motion prediction and compensation circuit 43 judges whether or not a selection signal S44 indicating that the motion prediction and compensation mode was selected was input from the selection circuit 44 at a predetermined timing, proceeds to step ST12 when judging that it was input, and terminates the processing when not judging so.

Step ST12

The motion prediction and compensation circuit 43 outputs a motion vector MV generated corresponding to the motion prediction and compensation mode selected at step ST9, or a difference motion vector thereof, and the selected motion prediction and compensation mode MEM to the reversible coding circuit 27.

[Selection Circuit 44]

The selection circuit 44 specifies a smaller indicator data between the indicator data COSTm input from the motion prediction and compensation circuit 43 and the indicator data COSTi input from the intra-prediction circuit 41 and outputs the prediction image data PIm or PIi input corresponding to the specified indicator data to the computation circuit 24 and the adder circuit 33.
Further, the selection circuit 44 outputs a selection signal S44 indicating that the motion prediction and compensation mode was selected to the motion prediction and compensation circuit 43 when the indicator data COSTm is smaller.
On the other hand, the selection circuit 44 outputs the selection signal S44 indicating that the intra-prediction mode was selected to the motion prediction and compensation circuit 43 when the indicator data COSTi is smaller.
Note that, in the present embodiment, it is also possible if the intra-prediction circuit 41 and the motion prediction and compensation circuit 43 output all generated indicator data COSTi and COSTm to the selection circuit 44, and the smallest indicator data is specified in the selection circuit 44.
Below, an explanation will be given of the overall operation of the coding device 2 shown in FIG. 2.
The image signal which becomes the input is first converted to a digital signal at the A/D conversion circuit 22.
Next, the frame image data is rearranged in the frame rearrangement circuit 23 in accordance with the GOP structure of the image compression information which becomes the output. The original image data S23 obtained by that is output to the computation circuit 24, the motion prediction and compensation circuit 43, and the intra-prediction circuit 41.
Next, the computation circuit 24 detects the difference between the original image data S23 from the frame rearrangement circuit 23 and the prediction image data PI from the selection circuit 44 and outputs the image data S24 indicating the difference to the orthogonal transform circuit 25.
Next, the orthogonal transform circuit 25 applies a discrete cosine transform, Karhunen-Loewe transform, or other orthogonal transform to the image data S24 to generate the image data (DCT coefficient) S25 and outputs this to the quantization circuit 26.
Next, the quantization circuit 26 quantizes the image data S25 and outputs the image data (quantized DCT coefficient) S26 to the reversible coding circuit 27 and the inverse quantization circuit 29.
Next, the reversible coding circuit 27 applies reversible coding such as variable length coding or arithmetic coding to the image data S26 to generate the image data S28 and stores this in the buffer 28.
The rate control circuit 32 controls the quantization rate in the quantization circuit 26 based on the image data S28 read out from the buffer 28.
Further, the inverse quantization circuit 29 inversely quantizes the image data S26 input from the quantization circuit 26 and outputs the result to the inverse orthogonal transform circuit 30.
Then, the inverse orthogonal transform circuit 30 outputs the image data generated by performing the inverse transform processing of the orthogonal transform circuit 25 to the adder circuit 33.
The adder circuit 33 adds the image data from the inverse orthogonal transform circuit 30 and the prediction image data PI from the selection circuit 44 to generate the recomposed image data and outputs this to the deblock filter 34.
Then, the deblock filter 34 eliminates the block distortion of the recomposed image data and writes the generated image data as the reference image data into the frame memory 31.
The intra-prediction circuit 41 performs the intra-prediction processing explained above and outputs the prediction image data PIi as the result of this and the indicator data COSTi to the selection circuit 44.
Further, the motion prediction and compensation circuit 43 performs the motion prediction and compensation processing explained by using FIG. 5 and FIG. 6 and outputs the prediction image data PIm as the result of this and the indicator data COSTm to the selection circuit 44.
Then, the selection circuit 44 specifies the smaller indicator data between the indicator data COSTm input from the motion prediction and compensation circuit 43 and the indicator data COSTi input from the intra-prediction circuit 41 and outputs the prediction image data PIm or PIi input corresponding to the specified indicator data to the computation circuit 24 and the adder circuit 33.
As explained above, the coding device 2 designates the motion prediction and compensation modes as not selected in the case where the motion vectors MV of Skip, Direct16x16, and Direct8x8 among the motion prediction and compensation modes are more than the motion vector MV of the inter base mode and predetermined standard value as explained by using FIG. 5 and FIG. 6.

For this reason, in the processing of step ST9 shown in FIG. 6, it is possible to avoid the selection of these motion prediction and compensation modes.

Namely, the coding device 2 forcibly selects the inter base mode when the motion vectors MV of the Skip, Direct16x16, and Direct8x8 modes greatly deviate from the original motion vector even when the indicator data COSTm is smaller, encodes the motion vectors or difference motion vectors thereof and the image data S26 as the quantized difference image data at the reversible coding circuit 27, and includes the same in the image data S2.

By this reason, it is possible to suppress the jerky motion etc. perceived in the decoded image due to the deviation of the motion vectors explained above and achieve a higher image quality.

<Modification of First Embodiment>

In the above embodiment, at steps ST2, ST4, and ST5 shown in FIG. 5, it is the prerequisite that the reference image data utilized be the same between the motion vectors (Skip) and MV (inter16x16), but it is possible to apply the embodiment of the present invention to a case where the reference image data are different.

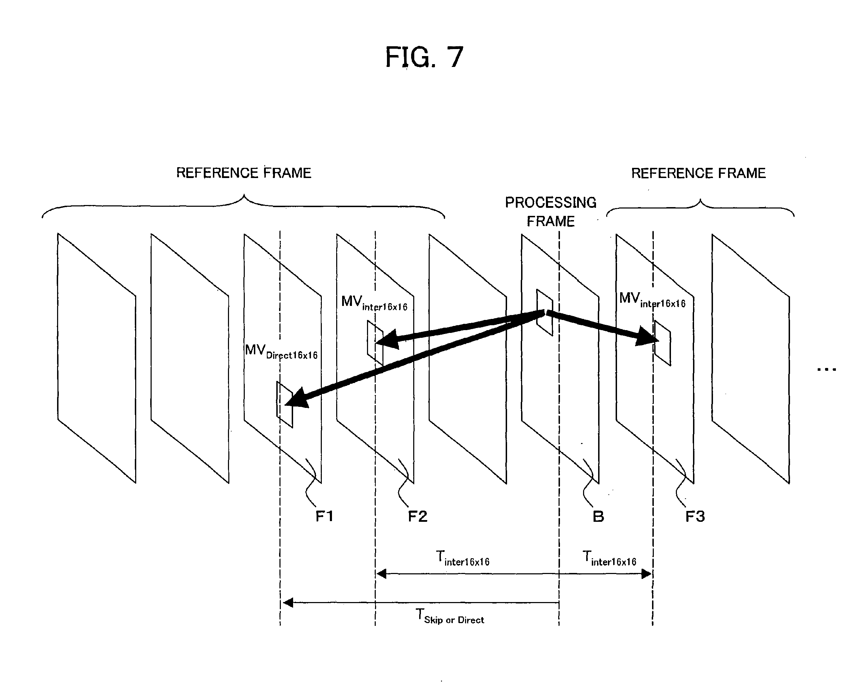

For example, as shown in FIG. 7, consider a case where block data covered by the processing in the frame data B uses the frame data F1 as the reference image data in the Direct16x16 mode and uses the frame data F2 as the reference image data in the inter 16x16 mode.

In this case, a motion vector MV1 (inter 16x16) obtained by correcting the motion vector MV (inter 16x16) based on the following Equation (9) is used for the judgment of the illustration of FIG. 5.

In the following Equation (9), "Tdirect" indicates the interval of the display timings between the reference image data F1 and the frame data B, and "Tinter" indicates the interval of the display timings between the frame data B and the reference image data F2.

$$[\text{Equation } 9]$$

$$MV1 = (Tdirect / Tinter) * MV \qquad \ldots (9)$$

Further, as shown in FIG. 7, consider a case where the block data covered by the processing in the frame data B uses the frame data F1 as the reference image data in the Direct16x16 mode and uses frame data F3 as the reference image data in the inter 16x16 mode.

In this case, a motion vector MV2 (inter 16x16) obtained by correcting the motion vector MV (inter 16x16) based on the following Equation (10) is used for the judgment of FIG. 5.

In the following Equation (10), "Tdirect" indicates the interval of the display timing between the reference image data F1 and the frame data B, and "Tinter" indicates the interval of the display timing between the frame data B and the reference image data F3.

$$[\text{Equation } 10]$$

$$MV2 = (-Tdirect / Tinter) * MV \qquad \ldots (10)$$

<Second Embodiment>

The present embodiment is an embodiment corresponding to the fourth to sixth invention.

First, an explanation will be given of the relationships between the components of the present embodiment and the components of the present invention.

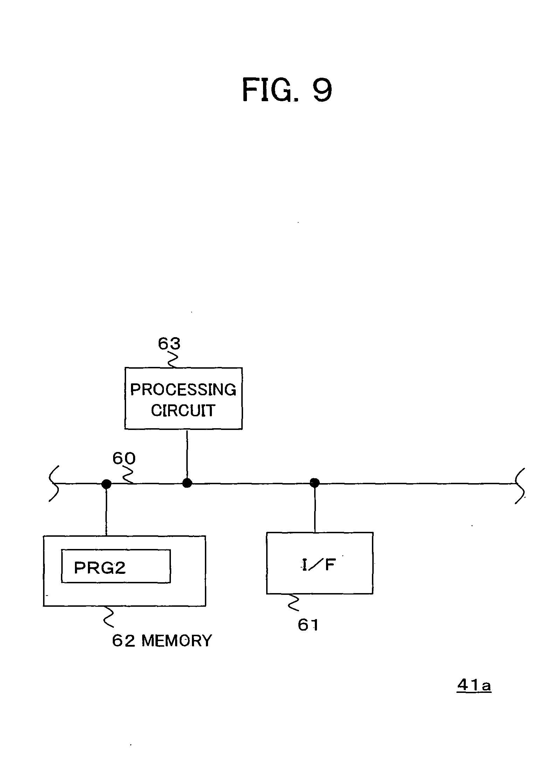

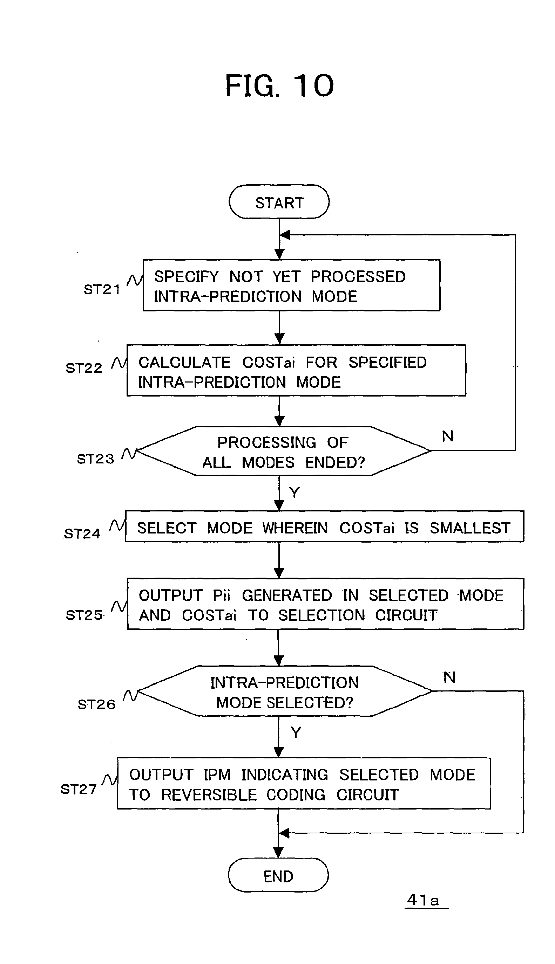

The generating means of the fourth invention is realized by a processing circuit 63 of an intra-prediction circuit 41a shown in FIG. 9 calculating indicator data SATDa based on Equation (12) explained later at step ST22 shown in FIG. 10.

The selecting means of the fourth invention is realized by calculating indicator data COSTai based on Equation (11) explained later at step ST22 shown in FIG. 10 and executing step ST24 by the processing circuit 63.

As will be explained later, the processing of calculating the indicator data SATD (first indicator data) by the intra-prediction circuit 41a corresponds to the first routine of the fifth invention or the first process of the sixth invention.

The processing of specifying Max4x4 by the intra-prediction circuit 41a corresponds to the second routine of the fifth invention or the second process of the sixth invention. The processing of calculating the indicator data SATDa (second indicator data) based on Equation (12) explained later by the intra-prediction circuit 41a corresponds to the third routine of the fifth invention or the third process of the sixth invention.

The processing of calculating the indicator data COSTai (third indicator data) based on Equation (11) explained later and performing step ST24 shown in FIG. 10 by the intra-prediction circuit 41a corresponds to the fourth routine of the fifth invention or the fourth process of the sixth invention.

The block data of the present embodiment corresponds to the block data of the present invention.

In the same way, the generating means of the fourth invention is realized by a processing circuit 83 of a motion prediction and compensation circuit 43a shown in FIG. 13 calculating the indicator data SATDa based on Equation (15) explained later at step ST42 shown in FIG. 14.

The selecting means of the fourth invention is realized by calculating the indicator data COSTam based on Equation (14) explained later at step ST22 shown in FIG. 14 and executing step ST44 by the processing circuit 83.

As will be explained later, the processing of calculating the indicator data SATD (first indicator data) by the motion prediction and compensation circuit 43a corresponds to the first routine of the fifth invention or the first process of the sixth invention.

The processing of specifying Max4x4 by the motion prediction and compensation circuit 43a corresponds to the second routine of the fifth invention or the second process of the sixth invention.

The processing of calculating the indicator data SATDa (second indicator data) based on Equation (15) explained later by the motion prediction and compensation circuit43a corresponds to the third routine of the fifth invention or the third process of the sixth invention.

The processing of calculating the indicator data COSTam (third indicator data) based on Equation (14) explained later and performing step ST44 shown in FIG. 14 by the motion prediction and compensation circuit 43a corresponds to the fourth routine of the fifth invention or the fourth process of the sixth invention.

Each of the programs PRG2 and PRG3 of the present embodiment corresponds to the program of the fifth invention.

Below, a detailed explanation will be given of the coding device according to the present embodiment.

FIG. 8 is an overall view of the configuration of a coding device 2a according to the embodiment of the present invention. As shown in FIG. 8, the coding device 2a has for example an A/D conversion circuit 22, frame rearrangement circuit 23, computation circuit 24, orthogonal transform circuit 25, quantization circuit 26, reversible coding circuit 27, buffer 28, inverse quantization circuit 29, inverse orthogonal transform circuit 30, frame memory 31, rate control circuit 32, adder circuit 33, deblock filter 34, intra-prediction circuit 41a, motion prediction and compensation circuit 43a, and selection circuit 44.

In FIG. 7, components given the same notations as those of FIG. 2 are the same as those explained in the first embodiment. The coding device 2a of the present embodiment is characterized in the intra-prediction circuit 41a and the motion prediction and compensation circuit 43a.

[Intra-prediction Circuit 41a]

The intra-prediction circuit 41a generates the prediction image data PIi of the macro block MB covered by the processing for each of a plurality of prediction modes, for example intra 4x4 mode and intra 16x16 mode, and generates the indicator data COSTai serving as the indicator of the code amount of the encoded data based on this and the macro block MB covered by the processing in the original image data S23.

Then, the intra-prediction circuit 41a selects the intra-prediction mode giving the smallest indicator data COSTai.

The intra-prediction circuit 41a outputs the prediction image data PIi generated corresponding to the finally selected intra-prediction mode and the indicator data COSTai to the selection circuit 44.

When receiving as input the selection signal S44 indicating that the intra-prediction mode was selected, the intra-prediction circuit 41a outputs the prediction mode IMP indicating the finally selected intra-prediction mode to the reversible coding circuit 27.

Note sometimes the intra-prediction coding by the intra-prediction circuit 41a is carried out even for the macro block MB belonging to the P slice or the B slice.

The intra-prediction circuit 41a generates for example the indicator data COSTai based on the following Equation (11).

[Equation 11]

$$COSTai = \sum_{1 \leq i \leq x} (SATDa + header\_cost(mode)) \quad \cdots (11)$$

In the above Equation (11), "i" is for example an identification number added to each of the block data of sizes corresponding to the intra-prediction modes forming the macro block MB covered by the processing.

Namely, the intra-prediction circuit 41a calculates "SATDa+header_cost (mode))" for all block data forming the macro block MB covered by the processing and adds them to calculates the indicator data COSTai.

The "header_cost (mode)" is indicator data serving as an indicator of the code amount of the header data including the selected intra-prediction mode, the quantization parameter (quantization scale), etc. and indicates a different value according to the intra-prediction mode.

Further, SATDa is indicator data serving as an indicator of the code amount of the difference image data between the block data in the macro block MB covered by the processing and previously determined block data (prediction block data) around the block data.

In the present embodiment, the prediction image data PIi is defined by one or more prediction block data.

The present embodiment is characterized in the method of calculation of SATDa.

The intra-prediction circuit 41a calculates the indicator data SATDa for the intra 16x16 mode and the intra 4x4 mode as shown in FIG. 12(A) and the following Equation (12).

[Equation 12]

$$SATDa = (SATD + Max4x4 * 16) / 2 \quad \cdots (12)$$

"SATD" in the above Equation (12) is the same as in Equation (5) explained in the first embodiment.

Note that in the present embodiment, the intra-prediction circuit 41a performs the computation of the above Equation (5) in units of 4x4 pixel data for block data comprised of 16x16 pixel data and adds the results to calculate SATD.

Namely, SATD is for example the data after applying a Hadamard transform to the sum of the absolute differences between the pixel data of the block data Org covered by the processing and the prediction image data (reference block data) Pre.

Here, the intra-prediction circuit 41a specifies the maximum value among the-computation results of Equation (5) performed for each 4x4 pixel data in the block data and defines that as Max4x4.

Then, the intra-prediction circuit 41a adds "Max4x4*16" to SATD and divides the result by 2 to calculate the indicator data SATDa.

By using the above Equation (12), the intra-prediction circuit 41a is able to calculate the indicator data SATDa in which the influence of Max4x4 (maximum value of the difference) is reflected more strongly in comparison with the case where only SATD is used.

Note that in place of SATD, the SAD shown in Equation (3) of the first embodiment may be used as well.

Further, in place of SATD, another indicator representing distortion or residue such as SSD defined in MPEG4 and AVC may be used as well.

FIG. 9 shows an example of the hardware configuration of the intra-prediction circuit 41a shown in FIG. 8.

As shown in FIG. 9, the intra-prediction circuit 41a has for example an interface 61, a memory 62, and a processing circuit 63 all connected via a data line 60.

The interface 61 performs the input/output of data with the frame rearrangement circuit 23, the reversible coding circuit 27, and the frame memory 31.

The memory 62 stores the program PRG2 and various data used for processing of the processing circuit 63.

The processing circuit 63 centrally controls the processing of the intra-prediction circuit 41a according to the program PRG2 read out from the memory 62.

Below, an explanation will be given of an example of the operation of the intra-prediction circuit 41a.

The operation of the intra-prediction circuit 41a shown below is controlled by the processing circuit 63 according to the program PRG2.

FIG. 10 is a flow chart for explaining the example of the operation of the intra-prediction circuit 41a.

The intra-prediction circuit 41a performs the following processing for the block data covered by the processing in the original image data S23.

Step ST21

The intra-prediction circuit 41a specifies a not yet processed intra-prediction mode among the plurality of intra-prediction modes including the intra 16x16 mode and intra 4x4 mode.

Step ST22

The intra-prediction circuit 41a calculates the indicator data COSTai by the means explained by using the above Equation (12) for the intra-prediction mode specified at step ST21.

Step ST23

The intra-prediction circuit 41a judges whether or not the processing of step ST22 has ended for all intra-prediction modes, proceeds to step ST24 when judging the end, and returns to step ST21 when not judging so.

Step ST24

The intra-prediction circuit 41a selects the smallest intra-prediction mode among indicator data COSTai calculated at step ST22 for all intra-prediction modes.

Step ST25

The intra-prediction circuit 41a outputs the prediction image data PIi and the indicator data COSTai generated corresponding to the intra-prediction mode selected at step ST24 to the selection circuit 44.

Step ST26

The intra-prediction circuit 41a judges whether or not the selection signal S44 indicating that the intra-prediction mode was selected was input from the selection circuit 44 at the predetermined timing, proceeds to step ST27 when judging that the selection signal S44 was input, and ends the processing when not judging so.

Step ST27

The intra-prediction circuit 41a outputs the intra-prediction mode IPM selected at step S24 to the reversible coding circuit 27.

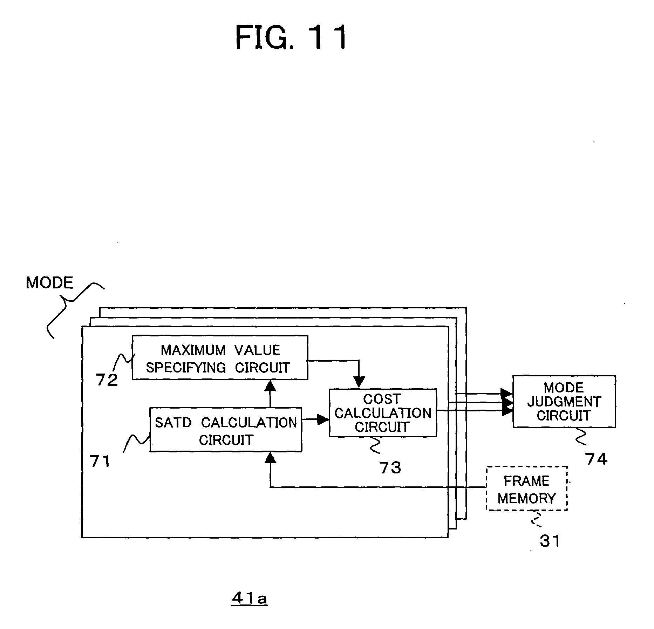

Note that, it is also possible if the intra-prediction circuit 41a is provided with for example a SATD calculation circuit 71, a maximum value specifying circuit 72, a COST calculation circuit 73, and a mode judgment circuit 74 as shown in FIG. 11 in place of the configuration shown in FIG. 9.

Here, the SATD calculation circuit 71 performs the computation of the above Equation (5) and adds the results to calculate SATD.

Further, the maximum value specifying circuit 72 specifies the maximum value among the computation results of Equation (5) performed for each 4x4 pixel data in the block data and defines that as Max4x4.

The COST calculation circuit 73 adds "Max4x4*16" to SATD and divides the result by 2 to calculate the indicator data SATDa.

Further, the mode judgment circuit 74 performs the processing of step ST24 shown in FIG. 10.

[Motion Prediction and Compensation Circuit 43a]

The motion prediction and compensation circuit 43a generates the motion vectors MV of the block data covered by the processing and the prediction image data in units of the block data defined by the motion prediction and compensation mode based on the reference image data encoded in the past and stored in the frame memory 31 for each of a plurality of motion prediction and compensation modes in the case where the macro block MB covered by the processing of the original image data S23 input from the frame rearrangement circuit 23 is inter-coded.

The size of the block data and the reference image data REF are defined by for example the motion prediction and compensation mode.

Further, the motion prediction and compensation circuit 43a generates the indicator data COSTam serving as the indicator of the code amount of the encoded data based on the macro block MB covered by the processing in the original image data S23 and the prediction block data (prediction image data PIm) thereof for each of the motion prediction and compensation modes.

Then, the motion prediction and compensation circuit 43a selects the motion prediction and compensation mode giving the smallest indicator data COSTam.

The motion prediction and compensation circuit 43a outputs the prediction image data PIm generated corresponding to the finally selected motion prediction and compensation mode and the indicator data COSTma to the selection circuit 44.

The motion prediction and compensation circuit 43a outputs the motion vector generated corresponding to the finally selected motion prediction and compensation mode or the difference motion vector between the motion vector and the prediction motion vector to the reversible coding circuit 27.

The motion prediction and compensation circuit 43a outputs the finally selected motion prediction and compensation mode MEM to the reversible coding circuit 27.

The motion prediction and compensation circuit 43a outputs the identification data of the reference image data (reference frame) selected in the motion prediction and compensation processing to the reversible coding circuit 27.

The motion prediction and compensation circuit 43a generates for example the indicator data COSTam based on the following Equation (13).

〔Equation 13〕

$$COSTam = \sum_{1 \leq i \leq x} (SATDa + header\_cost(mode)) \quad \cdots (13)$$

In the above Equation (13), "i" is for example an identification number added to each of the block data of sizes corresponding to the motion prediction and compensation modes forming the macro block MB covered by the processing. Namely, the motion prediction and compensation circuit 43a calculates "SATDa+header cost (mode))" for all block data forming the macro block MB covered by the processing and adds them to calculate the indicator data COSTam.

The "header_cost (mode)" is indicator data serving as an indicator of the code amount of the header data including the motion vector or the difference motion vector thereof, the identification data of the reference image data, the selected motion prediction and compensation mode, the quantization parameter (quantization scale), etc. and indicates a different value according to the motion prediction and compensation mode.

Further, SATDa is indicator data serving as an indicator of the code amount of the difference image data between the block data in the macro block MB covered by the processing and previously determined block data (prediction block data) around the block data.

In the present embodiment, the prediction image data PIi is defined by one or more prediction block data.

The present embodiment is characterized by the method of calculation of SATDa.

The motion prediction and compensation circuit 43a calculates the indicator data SATDa for the inter 16x16 mode, intra 16x16 mode, intra 4x4 mode, Skip mode, and Direct16x16 mode explained in the first embodiment as shown in FIG. 12 (A) and the following Equation (14).

〔Equation 14〕

$$SATDa = (SATD + Max4x4 * 16) / 2 \quad \cdots (14)$$

The "SATD" in the above Equation (14) is the same as in Equation (5) explained in the first embodiment.

Note that the motion prediction and compensation circuit 43a performs the computation of the above Equation (5) in units of 4x4 pixel data for the block data comprised by 16x16 pixel data and adds the results to calculate SATD.

Namely, SATD is for example the data after applying a Hadamard transform to the sum of the absolute differences between the pixel data of the block data Org covered by the processing and the prediction image data (reference block data) Pre.

Here, the motion prediction and compensation circuit 43a specifies the maximum value among the computation results of Equation (5) performed for each 4x4 pixel data in the block data and defines that as Max4x4.

Then, the motion prediction and compensation circuit 43a adds "Max4x4*16" to SATD and divides the result by 2 to calculate the indicator data SATDa.

By using the above Equation (14), the motion prediction and compensation circuit 43a is able to calculate indicator data SATDa in which the influence of Max4x4 (maximum value of the difference) is reflected more strongly in comparison with the case where only SATD is use

Further, the motion prediction and compensation circuit 43a calculates the indicator data SATDa for the inter 8x16 mode and the inter 16x8 mode as shown in FIG. 12(B) and the following Equation (15).

$$\text{[Equation 15]}$$

$$SATDa = (SATD + Max4x4 * 8) / 2$$

$$\text{...(15)}$$

"SATD" in the above Equation (15) is the same as in Equation (5) explained in the first embodiment.

Note that the motion prediction and compensation circuit 43a performs the computation of the above Equation (5) in units of 4x4 pixel data for the block data comprised by 8x16 or 16x8 pixel data and adds the results to calculates SATD.

Namely, SATD is for example the data after applying a Hadamard transform to the sum of the absolute differences between the pixel data of the block data Org covered by the processing and the prediction image data (reference block data) Pre.

Here, the motion prediction and compensation circuit 43a specifies the maximum value among the computation results of Equation (5) performed for each 4x4 pixel data in the block data, and defines that as Max4x4.

Then, the motion prediction and compensation circuit 43a adds "Max4x4*8" to SATD and divides the result by 2 to calculate the indicator data SATDa.

By using the above Equation (15), the motion prediction and compensation circuit 43a is able to calculate indicator data SATDa in which the influence of Max4x4 (maximum value of the difference) is reflected more strongly in comparison with the case where only SATD is used.

Further, the motion prediction and compensation circuit 43a calculates the indicator data SATDa for the inter 8x8 mode and the Direct8x8 mode explained in the first embodiment as shown in FIG. 12(C) and the following Equation (16).

$$\text{[Equation 16]}$$

$$SATDa = (SATD + Max4x4 * 4) / 2$$

$$\text{...(16)}$$

"SATD" in the above Equation (16) is the same as in Equation (5) explained in the first embodiment.

Note that the motion prediction and compensation circuit 43a performs the computation of the above Equation (5) in units of 4x4 pixel data for the block data comprised by 8x8 pixel data and adds the results to calculates SATD.

Namely, SATD is for example the data after applying a Hadamard transform to the sum of the absolute differences between the pixel data of the block data Org covered by the processing and the prediction image data (reference block data) Pre.

Here, the motion prediction and compensation circuit 43a specifies the maximum value among the computation results of Equation (5) performed for each 4x4 pixel data in the block data and defines that as Max4x4.

Then, the motion prediction and compensation circuit 43a adds "Max4x4*4" to SATD and divides the result by 2 to calculate the indicator data SATDa.

By using the above Equation (16), the motion prediction and compensation circuit 43a is able to calculate indicator data SATDa in which the influence of Max4x4 (maximum value of the difference) is reflected more strongly in comparison with the case where only SATD is used.

Further, the motion prediction and compensation circuit 43a calculates the indicator data SATDa for the inter 4x8 mode and the inter 8x4 mode as shown in FIG. 12(D) and the following

[Equation 17]

$$SATDa = (SATD + Max4x4 * 2) / 2 \qquad \ldots (17)$$

"SATD" in the above Equation (17) is the same as in Equation (5) explained in the first embodiment.
Note that the motion prediction and compensation circuit 43a performs the computation of the above Equation (5) in units of 4x4 pixel data for the block data comprised by 8x4 or 4x8 pixel data and adds the results to calculate SATD.
Namely, SATD is for example the data after applying a Hadamard transform to the sum of the absolute differences between the pixel data of the block data Org covered by the processing and the prediction image data (reference block data) Pre.
Here, the motion prediction and compensation circuit 43a specifies the maximum value among the computation results of Equation (5) performed for each 4x4 pixel data in the block data and defines that as Max4x4.
Then, the motion prediction and compensation circuit 43a adds "Max4x4*2" to SATD and divides the result by 2 to calculate the indicator data SATDa.
By using the above Equation (17), the motion prediction and compensation circuit 43a is able to calculate indicator data SATDa in which the influence of Max4x4 (maximum value of the difference) is reflected more strongly in comparison with the case where only SATD is used.
Further, the motion prediction and compensation circuit 43a calculates the indicator data SATDa for the inter 4x4 mode as shown in FIG. 12(E) and the following Equation (18).
[Equation 18]

$$SATDa = (SATD + Max4x4) \qquad \ldots (18)$$

"SATD" in the above Equation (18) is the same as in Equation (5) explained in the first embodiment.
Note that the motion prediction and compensation circuit 43a performs the computation of the above Equation (5) in units of 4x4 pixel data for the block data comprised by 4x4 pixel data and adds the results to calculate SATD.
Namely, SATD is for example the data after applying a Hadamard transform to the sum of the absolute differences between the pixel data of the block data Org covered by the processing and the prediction image data (reference block data) Pre.
Here, the motion prediction and compensation circuit 43a specifies the maximum value among the computation results of Equation (5) performed for each 4x4 pixel data in the block data and defines that as Max4x4.
Then, the motion prediction and compensation circuit 43a adds "Max4x4*4" to SATD and divides the result by 2 to calculate the indicator data SATDa.
By using the above Equation (18), the motion prediction and compensation circuit 43a is able to calculate the indicator data SATDa in which the influence of Max4x4 (maximum value of the difference) is reflected more strongly in comparison with the case where only SATD is used.
Note that, in place of SATD, SAD shown in Equation (3) of the first embodiment may be used as well.
FIG. 13 is an example of the hardware configuration of the motion prediction and compensation circuit 43a shown in FIG. 8.
As shown in FIG. 13, the motion prediction and compensation circuit 43a has for example an interface 81, a memory 82, and a processing circuit 83 all connected via a data line 80.
The interface 81 performs the input/output of data with the frame rearrangement circuit 23, the reversible coding circuit 27, and the frame memory 31.
The memory 82 stores the program PRG3 and various data used for processing of the processing circuit 83.

The processing circuit 83 centrally controls the processing of the motion prediction and compensation circuit 43a according to the program PRG3 read out from the memory 82.

Below, an explanation will be given of an example of the operation of the motion prediction and compensation circuit 43a.

The operation of the motion prediction and compensation circuit 43a shown below is controlled by the processing circuit 83 according to the program PRG3.

FIG. 14 is a flow chart for explaining the example of the operation of the motion prediction and compensation circuit 43a. The motion prediction and compensation circuit 43a performs the following processing for the block data covered by the processing in the original image data S23.

Step ST41

The motion prediction and compensation circuit 43a specifies a not yet processed motion prediction and compensation mode among a plurality of motion prediction and compensation modes including the inter 16x16 mode, Skip mode, Direct16x16 mode, inter 8x16 mode, inter 16x8 mode, inter 8x8 mode, Direct8x8 mode, inter 4x8 mode, inter 8x4 mode, and inter 4x4 mode.

Step ST42

The motion prediction and compensation circuit 43a calculates the indicator data COSTam by the above-explained means for the motion prediction and compensation mode specified at step ST41.

Step ST43

The motion prediction and compensation circuit 43a judges whether or not the processing of step ST42 was ended for all motion prediction and compensation modes, proceeds to step ST44 when judging the end, and returns to step T41 when not judging so.

Step ST44

The motion prediction and compensation circuit 43a selects the smallest motion prediction and compensation mode among the indicator data COSTam calculated at step ST42 for all motion prediction and compensation modes.

step ST45

The motion prediction and compensation circuit 43a outputs the prediction image data PImi generated corresponding to the motion prediction and compensation mode selected at step ST44 and the indicator data COSTam to the selection circuit 44.

Step ST46

The motion prediction and compensation circuit 43a judges whether or not the selection signal S44 indicating that the motion prediction and compensation mode was selected was input from the selection circuit 44 at the predetermined timing, proceeds to step ST47 when judging the input, and ends the processing when not judging so.

Step ST47

The motion prediction and compensation circuit 43a outputs the motion prediction and compensation mode MPM selected at step ST44, the motion vector MV, and the identification data of the reference image data to the reversible coding circuit 27.

Note that it is also possible if the motion prediction and compensation circuit 43a is provided with for example a SATD calculation circuit 91, a maximum value specifying circuit 92, a COST calculation circuit 93, and a mode judgment circuit 94 as shown in FIG. 15 in place of the configuration shown in FIG. 13.

Here, the SATD calculation circuit 91 performs the computation of the above Equation (5) and adds the results to calculates SATD.

Further, the maximum value specifying circuit 92 specifies the maximum value among computation results of Equation (5) performed for each 4x4 pixel data in the block data and defines that as Max4x4.

The COST calculation circuit 93 calculates the indicator data SATDa by using SATD as explained above.

Further, the mode judgment circuit 74 performs the processing of step ST44 shown in FIG. 14.

The example of the overall operation of the coding device 2a is the same as that of the coding device 2 of the first embodiment except the intra-prediction circuit 41a and the motion prediction and compensation circuit 43 perform the above-explained operation.

Note that in the present embodiment as well, it is also possible even if all indicator data COSTai and COSTam generated by the intra-prediction circuit 41a and the motion prediction and compensation circuit 43a are output to the selection circuit 44, and the selection circuit 44 specifies the smallest indicator data.

As explained above, the coding device 2a uses the indicator data STDAa in which the influence of Max4x4 (maximum value of the difference) is reflected strongly more than the case where only the SATD is used in the mode selection of the intra-prediction circuit 41a and the motion prediction and compensation circuit 43a.

By this reason, according to the coding device 2a, when the code amount of part of the blocks in the macro block covered by the processing is large and the code amount of most other blocks is small, it is possible to select a suitable mode from the viewpoint of the image quality for the coding of that part of the blocks.

<Modification of Second Embodiment>

In the second embodiment explained above, the case of calculating the indicator data STDAa based on FIG. 12 and Equation (12) and Equations (14) to (18) was exemplified, but in the present embodiment, the intra-prediction circuit 41a and the motion prediction and compensation circuit 43a calculate the indicator data SATDa as shown in FIG. 16 and the following Equations (19) to (23).

In the following Equations (19) to (23), a, b, c, d, e, f, g, h, i, and j are predetermined coefficients.

Here, the coefficients a, c, e, g, and i correspond to the first coefficient of the fourth invention, and the coefficients b, d, f, h, and j correspond to the second coefficient of the fourth invention.

For example, the intra-prediction circuit 41a calculates the indicator data SATDa based on FIG. 16(A) and the following Equation (19) in the inter 16x16 mode.

**[Equation 19]**

$$SATDa = (a * SATD + b * Max4x4 * 16) / (a + b)$$

$$...(19)$$

Further, the intra-prediction circuit 41a and the motion prediction and compensation circuit 43a calculate the indicator data SATDa based on FIG. 16(B) and the following Equation (20) in the intra 16x16 mode, intra 4x4 mode, Skip mode, and Direct16x16 mode.

**[Equation 20]**

$$SATDa = (c * SATD + d * Max4x4 * 16) / (c + d)$$

$$...(20)$$

Further, the motion prediction and compensation circuit 43a calculates the indicator data SATDa based on FIG. 16 (C) and the following Equation (21) in the inter 8x16 mode and the inter 16x8 mode.

**[Equation 21]**

$$SATDa = (e * SATD + f * Max4x4 * 8) / (e + f)$$

$$...(21)$$

22

Further, the motion prediction and compensation circuit 43a calculates the indicator data SATDa based on FIG. 16(D) and the following Equation (22) in the inter 8x8 mode and the Direct8x8 mode.

$$[Equation\ 22]$$

$$SATDa = (g * SATD + h * Max4x4 * 4) / (g + h)$$

$$\dots(22)$$

Further, the motion prediction and compensation circuit 43a calculates the indicator data SATDa based on FIG. 16(E) and the following Equation (23) in the inter 4x8 mode and the inter 8x4 mode.

$$[Equation\ 23]$$

$$SATDa = (i * SATD + j * Max4x4 * 2) / (i + j)$$

$$\dots(23)$$

Further, the motion prediction and compensation circuit 43a calculates the indicator data SATDa based on FIG. 16(F) and the following Equation (24) in the inter 4x4 mode.

$$[Equation\ 24]$$

$$SATDa = (SATD + Max4x4)$$

$$\dots(24)$$

In the present embodiment, it is made possible to set for example the coefficients a, b, c, d, e, f, g, h, i and j from the outside and possible to freely set the weights of SATD and Max4x4.
For example, in the present embodiment, it is also possible to set a=15, b=1, c=7, d=1, e=1, f=1, g=3, h=1, i=1, and j=1.
The present invention is not limited to the above-explained embodiments.
The present invention may use modes other than the intra-prediction mode and the motion prediction and compensation mode explained above.

INDUSTRIAL APPLICABILITY

The invention can be applied to a system for coding image data.

**Claims**

**1.** An image processing apparatus used for generating a motion vector of block data of a block covered by processing among a plurality of blocks defined in a two-dimensional image region and encoding the motion vector and a difference between prediction block data generated based on the motion vector and the block data covered by the processing, comprising:

a judging means for judging whether or not the difference between motion vectors generated for each of a first mode of predicting the motion vector of the block data covered by the processing from the motion vector of other block data and not encoding the predicted motion vector and a second mode of generating the motion vector of the block data covered by the processing based on the difference between the block data covered by the processing and the block data in a reference image data and encoding the motion vector and difference image data between the block data covered by the processing and the reference block data corresponding to the generated motion vector in the reference image data exceeds a predetermined standard; and

a selecting means for selecting the second mode when the judging means judges that the difference exceeds the predetermined standard and selecting a mode between the first mode and the second mode in which the coded data amount by the encoding becomes the minimum when the judging means judges that the difference does not exceed the predetermined standard.

2.  An image processing apparatus as set forth in claim 1, further comprising a provision means for performing processing for providing identification data of said mode selected by said selecting means and data defined by said selected mode.

3.  An image processing apparatus as set forth in claim 1, wherein said selecting means uses said first mode further encoding difference image data between said block data covered by the processing and reference block data which said predicted motion vector in reference image data indicates.

4.  An image processing apparatus as set forth in claim 3, wherein said selecting means uses said first mode performing prediction from a motion vector of said other block data in frame data or field data to which the block data covered by processing belongs.

5.  An image processing apparatus as set forth in claim 3, wherein said selecting means uses said first mode performing prediction from a motion vector of said other block data in frame data or field data different from the frame data or the field data to which the block data covered by processing belongs.

6.  An image processing apparatus as set forth in claim 1, wherein said selecting means uses said first mode does not provide to a decoding side the difference image data between said block data covered by processing and reference block data which said predicted motion vector in reference image data indicates.

7.  An image processing apparatus as set forth in claim 1, wherein when the frame data or the field data used for generating said motion vector differs between said first mode and said second mode, said judging means converts said motion vector generated for one mode so as to correspond to the reference image data used for the other mode and used the converted motion vector to generate said difference.

8.  A program for making a computer execute processing for generating a motion vector of block data of a block covered by the processing among a plurality of blocks defined in a two-dimensional image region and encoding the motion vector and a difference between prediction block data generated based on the motion vector and the block data covered by the processing, including:

    a first routine of generating the motion vector for each of a first mode of predicting the motion vector of the block data covered by the processing from the motion vector of the other block data and not encoding the predicted motion vector and a second mode of generating the motion vector of the block data covered by the processing based on the difference between the block data covered by the processing and the block data in a reference image data and encoding the motion vector and a difference image data between the block data covered by the processing and the reference block data corresponding to the generated motion vector in the reference image data;
    a second routine of judging whether or not the difference between the motion vector of the first mode generated in the first routine and the motion vector of the second mode exceeds a predetermined standard; and
    a third routine of selecting the second mode when judging that the difference exceeds the predetermined standard in the second routine and selecting the mode between the first mode and the second mode in which the coded data amount by the encoding becomes the minimum when judging that the difference does not exceed the predetermined standard.

9.  An image processing method including having a computer executes processing for generating a motion vector of block data of a block covered by processing among a plurality of blocks defined in a two-dimensional image region and encoding the motion vector and a difference between prediction block data generated based on the motion vector and the block data covered by the processing, comprising:

    a first process of generating the motion vector for each of a first mode of predicting the motion vector of the block data covered by the processing from the motion vector of other block data and not encoding the predicted motion vector and a second mode of generating the motion vector of the block data covered by the processing based on the difference between the block data covered by the processing and the block data in a reference image data and encoding the motion vector and difference image data between the block data covered by the processing and the reference block data corresponding to the generated motion vector in the reference image data;

a second process of judging whether or not the difference between the motion vector of the first mode generated in the first process and the motion vector of the second mode exceeds a predetermined standard; and

a third process of selecting the second mode when judging that the difference exceeds the predetermined standard in the second process and selecting the mode between the first mode and the second mode in which the code amount by the encoding becomes the minimum when judging that the difference does not exceed the predetermined standard.

10. An image processing apparatus used for encoding block data of a block covered by processing among one or more blocks forming a macro block defined in a two-dimensional image region based on that block data and prediction block data of the block data, comprising:

a generating means for generating first indicator data in accordance with a difference between one or more unit block data forming the block data covered by the processing and unit block data in prediction block data corresponding to this unit block data in units of the unit block data, specifying first indicator data indicating the maximum data among the first indicator data, and generating second indicator data in which the specified first indicator data is strongly reflected as a value in comparison with a sum of the first indicator data generated for the unit block data forming the block data covered by the processing based on the first indicator data; and

a selecting means for selecting the mode giving the smallest third indicator data in accordance with the sum of the second indicator data generated by the generating means for the one or more block data forming a macro block covered by the processing among a plurality of modes in which at least one of the size of the block data defined for the macro block covered by the processing, existence of encoding of the motion vector, and existence of encoding of the difference are different from each other.

11. An image processing apparatus as set forth in claim 10, wherein said plurality of modes incluedes at least one of an intra-prediction mode and motion prediction and compensation mode.

12. An image processing apparatus as set forth in claim 10, wherein said generating means generates said second indicator data corresponding to a value of a sum of said first indicator data generated for said unit block data forming said block data covered by processing plus the number of said unit block data forming said block data covered by processing multiplied with said specified first indicator data.

13. An image processing apparatus as set forth in claim 10, wherein said generating means generates said second indicator data corresponding to a value of a sum of said first indicator data generated for said unit block data forming said block data covered by processing multiplied with a first coefficient plus the number of said unit block data forming said block data covered by processing and a second coefficient multiplied with said specified first indicator data.

14. A program for making a computer execute processing for encoding block data of a block covered by processing among one or more blocks forming a macro block defined in a two-dimensional image region based on the block data and prediction block data of the block data, having:

a first routine of generating first indicator data in accordance with a difference between one or more unit block data forming the block data covered by the processing and unit block data in prediction block data corresponding to this unit block data in units of the unit block data;

a second routine of specifying the first indicator data indicating the maximum data among the first indicator data generated in the first routine;

a third routine of generating second indicator data in which the first indicator data specified in the second routine is strongly reflected as a value in comparison with the sum of the first indicator data generated for the unit block data forming the block data covered by the processing based on the first indicator data generated in the first routine; and

a fourth routine of selecting the mode giving the smallest third indicator data in accordance with the sum of the second indicator data generated in the third routine for the one or more block data forming the macro block covered by the processing among a plurality of modes in which at least one of the size of the block data defined for the macro block covered by the processing, existence of encoding of the motion vector, and existence of encoding of the difference are different from each other.

**15.** An image processing method including having a computer execute processing for encoding block data of a block covered by the processing among one or more blocks forming a macro block defined in the two-dimensional image region based on the block data and the prediction block data of the block data, including:

a first process of generating first indicator data in accordance with the difference between one or more unit block data forming the block data covered by the processing and the unit block data in the prediction block data corresponding to this unit block data in units of the unit block data;

a second process of specifying the first indicator data indicating the maximum data among the first indicator data generated in the first process;

a third process of generating second indicator data in which the first indicator data specified in the second process is strongly reflected as a value in comparison with the sum of the first indicator data generated for the unit block data forming the block data covered by the processing based on the first indicator data generated in the first process; and

a fourth process of selecting the mode giving the smallest third indicator data in accordance with the sum of the second indicator data generated in the third process for the one or more block data forming the macro block covered by the processing among a plurality of modes in which at least one of the size of the block data defined for the macro block covered by the processing, existence of encoding of the motion vector, and existence of encoding of the difference are different from each other.

# FIG. 1

CODING DEVICE — TRANSMISSION MEDIUM → DECODING DEVICE

# FIG. 2

EP 1 753 247 A1

# FIG. 3

$RL_0$      B      $RL_1$

$MV_c$

$MV_0$

CO-LOCATED BLOCK

$MV_1$

DIRECT MODE BLOCK

$TD_B$

$TD_D$

# FIG. 4

53

PROCESSING CIRCUIT

50

PRG1

I/F

52 MEMORY

51

43

# FIG. 5

START

ST1 — GENERATE MV(INTER 16X16), MV(INTER 8X8), MV(SKIP), MV(DIRECT16X16), AND MV(DIRECT8X8)

ST2 — $|MV(SKIP) - MV(INTER16x16)| > MV\_RANGE?$

Y → ST3 — DESIGNATE MODE SKIP AS NOT SELECTED

N

ST4 — $|MV(DIRECT8X8) - MV(INTER8X8)| > MV\_RANGE?$

Y → ST5 — DESIGNATE MODE DIRECT8X8 AS NOT SELECTED

N

ST6 — $|MV(DIRECT16x16) - MV(INTER16x16)| > MV\_RANGE?$

Y → ST7 — DESIGNATE MODE DIRECT16X16 AS NOT SELECTED

N

A

43

# FIG. 6

A

ST8 — CALCULATE COSTm FOR MODE NOT DESIGNATED AS NOT SELECTED (VALID)

ST9 — SELECT MODE WHEREIN COSTm IS SMALLEST

ST10 — OUTPUT Pim GENERATED IN SELECTED MODE AND COSTm TO SELECTION CIRCUIT

ST11 — MOTION PREDICTION AND COMPENSATION MODE SELECTED?

N

Y

ST12 — OUTPUT MOTION VECTOR MV CORRESPONDING TO SELECTED MODE TO REVERSIBLE CODING CIRCUIT

END

43

# FIG. 7

REFERENCE FRAME

PROCESSING
FRAME

REFERENCE FRAME

$MV_{inter16x16}$

$MV_{inter16x16}$

$MV_{Direct16x16}$

F1

F2

B

F3

$T_{inter16x16}$

$T_{inter16x16}$

$T_{Skip\ or\ Direct}$

EP 1 753 247 A1

# FIG. 8

MV:MOTION VECTOR
PIm, PIi:PREDICTION IMAGE DATA
COSTam, COSTai:INDICATOR DATA

# FIG. 9

63

PROCESSING
CIRCUIT

60

PRG2

I/F

61

62 MEMORY

41a

# FIG. 10

```
                    ┌─────────────┐
                    │    START    │
                    └──────┬──────┘
                           │ ◄──────────────────────┐
                           ▼                         │
        ┌──────────────────────────────────────┐    │
 ST21   │ SPECIFY  NOT  YET  PROCESSED          │    │
        │ INTRA-PREDICTION  MODE                │    │
        └──────────────────┬───────────────────┘    │
                           ▼                         │
        ┌──────────────────────────────────────┐    │
 ST22   │ CALCULATE  COSTai  FOR  SPECIFIED     │    │
        │ INTRA-PREDICTION  MODE                │    │
        └──────────────────┬───────────────────┘    │
                           ▼               N         │
 ST23         ◄  PROCESSING  OF  ─────────────────────┘
                 ALL  MODES  ENDED?  ►
                           │ Y
                           ▼
 ST24   │ SELECT  MODE  WHEREIN  COSTai  IS  SMALLEST │
                           ▼
        ┌──────────────────────────────────────┐
 ST25   │ OUTPUT  Pii  GENERATED  IN  SELECTED  MODE │
        │ AND  COSTai  TO  SELECTION  CIRCUIT   │
        └──────────────────┬───────────────────┘
                           ▼               N
 ST26         ◄  INTRA-PREDICTION  ──────────────┐
                 MODE  SELECTED?  ►               │
                           │ Y                    │
                           ▼                      │
        ┌──────────────────────────────────────┐ │
 ST27   │ OUTPUT  IPM  INDICATING  SELECTED  MODE │ │
        │ TO  REVERSIBLE  CODING  CIRCUIT       │ │
        └──────────────────┬───────────────────┘ │
                           ▼ ◄────────────────────┘
                    ┌─────────────┐
                    │     END     │
                    └─────────────┘
```

41a

# FIG. 11

MODE

MAXIMUM VALUE
SPECIFYING CIRCUIT

72

SATD CALCULATION
CIRCUIT

71

COST
CALCULATION
CIRCUIT

73

MODE
JUDGMENT
CIRCUIT

74

FRAME
MEMORY

31

41a

MODE : INTER 16X16, NTRA 16X16, INTRA 4X4, SKIP, DIRECT 16X16

FIG. 12A

$$\frac{\blacksquare + \blacksquare}{2}$$

MODE : INTER 8X16, INTER 16X8

FIG. 12B

$$\frac{\blacksquare + \blacksquare}{2}$$

MODE : INTER 8X8, DIRECT 8X8

FIG. 12C

$$\frac{\blacksquare + \blacksquare}{2}$$

MODE : INTER 4X8, INTER 8X4

FIG. 12D

$$\frac{\blacksquare + \blacksquare}{2}$$

MODE : INTER 4X4

FIG. 12E

$$\blacksquare = \blacksquare$$

▨ : MAXIMUM VALUE OF SATD (4X4 BLOCK)

# FIG. 13

83

PROCESSING
CIRCUIT

80

PRG3

I／F

82 MEMORY

81

<u>43a</u>

# FIG. 14

```
                    ┌─────────────┐
                    │    START    │
                    └──────┬──────┘
                           │
                           ▼
          ┌──────────────────────────────────────┐
  ST41    │ SPECIFY NOT YET PROCESSED MOTION      │
          │ PREDICTION AND COMPENSATION MODE      │
          └──────────────────┬───────────────────┘
                             │
                             ▼
          ┌──────────────────────────────────────┐
  ST42    │ CALCULATE COSTam FOR SPECIFIED MOTION │
          │ PREDICTION AND COMPENSATION MODE      │
          └──────────────────┬───────────────────┘
                             │
                             ▼
               ╱──────────────────────╲       N
  ST43        ⟨      PROCESSING OF      ⟩──────────┐
               ╲    ALL MODES ENDED?    ╱          │
                ╲──────────┬───────────╱           │
                           │ Y                     │
                           ▼                       │
          ┌──────────────────────────────────────┐ │
  ST44    │ SELECT MODE WHEREIN COSTam IS SMALLEST│ │
          └──────────────────┬───────────────────┘ │
                             │                      │
                             ▼                      │
          ┌──────────────────────────────────────┐ │
  ST45    │ OUTPUT PIm GENERATED IN SELECTED MODE │ │
          │ AND COSTam TO SELECTION CIRCUIT       │ │
          └──────────────────┬───────────────────┘ │
                             │                      │
                             ▼                      │
               ╱──────────────────────╲       N     │
  ST46        ⟨   MOTION PREDICTION     ⟩──────┐     │
               ⟨   AND COMPENSATION     ⟩      │     │
               ╲    MODE SELECTED?      ╱      │     │
                ╲──────────┬───────────╱       │     │
                           │ Y                 │     │
                           ▼                   │     │
          ┌──────────────────────────────────────┐ │
  ST47    │ OUTPUT MPM, MV, ETC. INDICATING SELECTED│ │
          │ MODE TO REVERSIBLE CODING CIRCUIT     │ │
          └──────────────────┬───────────────────┘ │
                             │◄──────────────┘     │
                             ▼
                    ┌─────────────┐
                    │     END     │
                    └─────────────┘
```

43a

# FIG. 15

MODE

MAXIMUM VALUE
SPECIFYING CIRCUIT

92

SATD CALCULATION
CIRCUIT

91

COST
CALCULATION
CIRCUIT

93

MODE
JUDGMENT
CIRCUIT

94

FRAME
MEMORY

31

43a

MODE : INTER 16X16

FIG. 16A

$$a \times \boxed{\phantom{grid}} + b \times \boxed{\phantom{grid}}$$

a+b

MODE : INTRA 16X16, INTRA 4X4, SKIP, DIRECT 16X16

FIG. 16B

$$c \times \boxed{\phantom{grid}} + d \times \boxed{\phantom{grid}}$$

c+d

MODE : INTER 8X16, INTER 16X8

FIG. 16C

$$e \times \boxed{\phantom{grid}} + f \times \boxed{\phantom{grid}}$$

e+f

MODE : INTER 8X8, DIRECT 8X8

FIG. 16D

$$g \times \boxed{\phantom{grid}} + h \times \boxed{\phantom{grid}}$$

g+h

▨ :MAXIMUM VALUE OF SATD (4X4 BLOCK)

MODE : INTER 4X8, INTER 8X4

FIG. 16E

$$i \times \boxed{\phantom{grid}} + j \times \boxed{\phantom{grid}}$$

i+j

MODE : INTER 4X4

FIG. 16F

$$\boxed{\phantom{grid}} = \boxed{\phantom{grid}}$$

EP 1 753 247 A1

<div style="text-align:center">**INTERNATIONAL SEARCH REPORT**</div>

| | International application No. |
|---|---|
| | PCT/JP2005/010020 |

**A. CLASSIFICATION OF SUBJECT MATTER**
Int.Cl$^7$ H04N7/32

According to International Patent Classification (IPC) or to both national classification and IPC

**B. FIELDS SEARCHED**

Minimum documentation searched (classification system followed by classification symbols)
Int.Cl$^7$ H04N7/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-513565 A (Koninklijke Philips Electronics N.V.), 08 April, 2003 (08.04.03), Full text; all drawings & WO 01/33864 A1 & US 6654420 B1 & EP 1142343 A1 | 1-9 |
| A | JP 2004-32355 A (Nippon Telegraph And Telephone Corp.), 29 January, 2004 (29.01.04), Full text; all drawings (Family: none) | 1-9 |
| A | JP 2003-299102 A (LG Electronics Inc.), 17 October, 2003 (17.10.03), Full text; all drawings & US 2003/0179826 A1 & EP 1347649 A1 | 1-9 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 September, 2005 (01.09.05) | 20 September, 2005 (20.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/010020

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2002-290977 A (Mitsubishi Electric Corp.), 04 October, 2002 (04.10.02), Full text; all drawings (Family: none) | 1-9 |
| A | JP 10-304383 A (Victor Company Of Japan, Ltd.), 13 November, 1998 (13.11.98), Full text; all drawings & US 6141381 A1 & EP 874526 A2 | 1-9 |
| A | JP 7-50842 A (Thomson Consumer Electronics, Inc.), 21 February, 1995 (21.02.95), Full text; all drawings & US 5508744 A1 & EP 615386 A2 | 1-9 |

Form PCT/ISA/210 (continuation of second sheet) (January 2004)

## INTERNATIONAL SEARCH REPORT

| | International application No. |
|---|---|
| | PCT/JP2005/010020 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
   (1) The inventions of claims 1-9 relate to a selection method between the first mode not encoding the motion vector and the second mode encoding the motion vector.
   (2) The inventions of claims 10-15 relate to a calculation method of index data used when deciding a prediction mode.

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1-9

**Remark on Protest**     ☐ The additional search fees were accompanied by the applicant's protest.

☐ No protest accompanied the payment of additional search fees.

Form PCT/ISA/210 (continuation of first sheet (2)) (January 2004)